# EUROPEAN PATENT APPLICATION

(11) **EP 4 610 523 A1**
(43) Date of publication of application: **03.09.2025**
(21) Application number: 23882705.9
(22) Date of filing: 25.10.2023
(51) Int. Cl.: F16H 25/24, B23Q 1/01, B23Q 1/58, B23Q 5/40, F16C 23/06, F16C 25/08, F16F 1/36, F16F 9/10, F16F 15/023, F16F 15/08, F16H 25/20, F16H 25/22, F16J 15/18

(54) **ROTATION SUPPORT DEVICE AND SUPPORT MECHANISM POSITION ADJUSTMENT MECHANISM FOR SHAFT SUPPORT DEVICE**

(30) Priority: 28.10.2022 JP 2022173763; 21.07.2023 JP 2023118997; 22.08.2023 JP 2023134637
(71) Applicant: NSK LTD., Tokyo 141-8560 (JP)
(72) Inventor: ARAI, Satoru, Fujisawa-shi, Kanagawa 251-8501 (JP)
(74) Representative: Grünecker Patent- und Rechtsanwälte PartG mbB
(86) International application number: PCT/JP2023/038614
(87) International publication number: WO 2024/090501

(57) **Abstract**

A support mechanism (30) for rotatably supporting both axial end portions of a screw shaft (21) comprises: a bearing unit (41) having a moving-side bearing housing (51) and a pair of angular ball bearings (33B); a support base (43); and a housing position adjustment mechanism (44) disposed between the bearing unit (41) and the support base (43). The housing position adjustment mechanism (44) comprises: a support-base-side member (61) provided on the support base (43) side; a bearing-housing-side member (62) provided on the bearing housing (51) side, and capable of relative movement in the axial direction with respect to the support-base-side member (61); a working fluid accommodated in a pressure chamber (66) formed between the support-base-side member (61) and the bearing-housing-side member (62), in a storage chamber (71) formed in either the support-base-side member or the bearing-housing-side member, and in an orifice (72) establishing communication between the pressure chamber (66) and the storage chamber (71); a disc spring (80) disposed inside the pressure chamber (66) in a state compressed between the opposing axial end surfaces of the support-base-side member (61) and the bearing-housing-side member (62); and a hollow member (90) accommodated in the storage chamber (71). Consequently, the support rigidity in the axial direction can be continuously and stably maintained, even if the axial length of a screw shaft or a rotary shaft changes owing to the effect of heat.

## Description

### TECHNICAL FIELD

The present invention relates to a rotation support device that supports a rotation shaft such as a ball screw feeding device or a spindle device, and a support mechanism position adjustment mechanism for a shaft support device that supports a shaft.

### BACKGROUND ART

In the ball screw feeding device, high axial rigidity is required to maintain feeding accuracy of a screw shaft. In the related art, as a method for imparting rigidity to a screw shaft of a ball screw device, a method of combining a plurality of angular bearings and then applying a preload, and disposing the combined bearings at one end or both ends of the screw shaft to fix and support the screw shaft in an axial direction is generally used. In addition, when thermal expansion of the screw shaft is taken into consideration, a method is adopted in which tension is applied in advance to the screw shaft in the axial direction to elongate the screw shaft by a predetermined amount. Patent Literature 1 describes a pre-tension mechanism that applies a tension to a feed screw (screw shaft) in advance by adjusting an axial dimension of a spacer, and when the feed screw extends due to a temperature rise beyond a range to be extended by the pre-tension, further moving the bearing in the axial direction by a disc spring or a pressure of a fluid to apply a tension to the feed screw.

### CITATION LIST

### PATENT LITERATURE

Patent Literature 1: JP2573982Y2

### SUMMARY OF INVENTION

### TECHNICAL PROBLEM

However, when a load called a pre-tension applied to the feed screw is excessively large, a large load is applied to the bearing, and the bearing may be damaged. For this reason, normally, a disc spring, a fluid supplied from outside, or the like, as seen in the pre-tension mechanism described in Patent Literature 1 is provided as long as no excessive load is applied to the bearing in the axial direction. However, in the case of using the disc spring, since the load becomes weaker as the shaft extends, it is only possible to cope with the extension by 3 degrees to 4 degrees of the temperature rise. In a machining center or the like, the temperature rise of the ball screw often exceeds 4 degrees, and in this case, the load by the disc spring may be insufficient, and the support rigidity in the axial direction may decrease.

In the method of applying a load by a hydraulic pressure by supplying a fluid from the outside, there are problems that external devices such as a hydraulic pump are required, the ball screw feeding device is increased in size, cost is increased, and additional energy is consumed.

Further, such problems exist not only in the ball screw feeding device but also in a rotation support device such as a spindle device in which both ends in the axial direction of a rotation shaft are supported by a pair of support mechanisms in a rotatable manner.

The present invention has been made in view of the above-described problems, and an object of the present invention is to provide a rotation support device and a support mechanism position adjustment mechanism for a shaft support device capable of continuously and stably maintaining support rigidity in an axial direction even when an axial length of a rotation shaft changes due to an influence of heat.

### SOLUTION TO PROBLEM

The above object of the present invention is achieved by the following configurations.
[1] A rotation support device, including:
   a rotation shaft; and
   a pair of support mechanisms that respectively support both ends in an axial direction of the rotation shaft in a rotatable manner, in which
   one of the pair of support mechanisms includes
      a bearing unit including a bearing housing and a bearing that supports the rotation shaft in a rotatable manner with respect to the bearing housing and capable of supporting an axial load,
      a support base through which the rotation shaft penetrates or which is disposed around the rotation shaft, and
      a housing position adjustment mechanism disposed between the bearing unit and the support base, and
   the housing position adjustment mechanism includes
      a support base side member provided on the support base side and through which the rotation shaft penetrates or which is disposed around the rotation shaft,
      a bearing housing side member provided on the bearing housing side, through which the rotation shaft penetrates or which is disposed around the rotation shaft, and movable relative to the support base side member in the axial direction,
      a working fluid accommodated in a pressure chamber formed between the support base side member and the bearing housing side member, a storage chamber formed in the support base side member or the bearing housing side member, and an orifice allowing the pressure chamber to communicate with the storage chamber,
      an elastic member disposed in a compressed state between opposite end surfaces in the axial direction of the support base side member and the bearing housing side member in the pressure chamber, and a hollow member accommodated in the storage chamber.
[2] A support mechanism position adjustment mechanism for a shaft support device including a shaft and a pair of support mechanisms provided at both ends in an axial direction of the shaft to support the shaft, the support mechanism position adjustment mechanism for a shaft support device being provided in one of the pair of support mechanisms, one of the pair of support mechanisms including a support through which the shaft penetrates or which is disposed around the shaft, the support mechanism position adjustment mechanism including:
   a first member provided on one of the shaft side and the support side, and through which the shaft is capable of penetrating or which is capable of being disposed around the shaft;
   a second member provided on the other of the shaft side and the support side, and through which the shaft is capable of penetrating or which is capable of being disposed around the shaft, and which is movable in the axial direction relative to the first member;
   a working fluid accommodated in a pressure chamber formed between the first member and the second member, a storage chamber formed in the first member or the second member, and an orifice allowing the pressure chamber to communicate with the storage chamber;
   an elastic member disposed in a compressed state between opposite end surfaces in the axial direction of the first member and the second member in the pressure chamber; and
   a hollow member accommodated in the storage chamber.

### ADVANTAGEOUS EFFECTS OF INVENTION

According to the rotation support device of the present invention, even when an axial length of the rotation shaft changes due to an influence of heat, support rigidity in the axial direction can be continuously and stably maintained, and vibration in the axial direction and a radial direction can be damped.

According to the support mechanism position adjustment mechanism for a shaft support device of the present invention, even when an axial length of the shaft changes due to an influence of heat, support rigidity in the axial direction can be continuously and stably maintained, and vibration in the axial direction and a radial direction can be damped.

### BRIEF DESCRIPTION OF DRAWINGS

FIG. 1 is a cross-sectional view of a table feeding system of a machine tool to which a ball screw feeding device according to a first embodiment of the present invention is applied.
FIG. 2 is an enlarged cross-sectional view of a support mechanism including a housing position adjustment mechanism illustrated in FIG. 1.
FIG. 3 is a view on an arrow A in FIG. 2.
FIG. 4 is a cross-sectional view illustrating a modification of a disc spring.
FIGS. 5A to 5C are cross-sectional views illustrating first to third modifications of a hollow member disposed in a pressure chamber.
FIGS. 6A and 6B are cross-sectional views illustrating fourth and fifth modifications of a hollow member.
FIG. 7 is a cross-sectional view illustrating a sixth modification of a hollow member.
FIGS. 8A to 8C are cross-sectional views of the hollow member according to seventh to ninth modifications of the first embodiment.
FIGS. 9A to 9C are cross-sectional views of the hollow member according to tenth to twelfth modifications of the first embodiment.
FIGS. 10A and 10B are cross-sectional views of the hollow member according to thirteenth and fourteenth modifications of the first embodiment.
FIGS. 11A to 11C are cross-sectional views of the hollow member according to fifteenth to seventeenth modifications of the first embodiment.
FIG. 12 is a view corresponding to FIG. 2 of a ball screw feeding device according to a second embodiment of the present invention.
FIG. 13 is an enlarged view of a portion XIII in FIG. 12.
FIGS. 14A to 14C are enlarged cross-sectional views of a main part illustrating an example in which a wear-resistant member is applied to a seal groove of the ball screw feeding device according to modifications of the second embodiment.
FIG. 15 is a view corresponding to FIG. 2 of a ball screw feeding device according to a third embodiment of the present invention.
FIG. 16 is a view corresponding to FIG. 2 of a ball screw feeding device according to a fourth embodiment of the present invention.
FIG. 17 is a view corresponding to FIG. 2 illustrating a pair of angular ball bearings of a bearing unit in back surface combination according to a second modification of the present invention.
FIG. 18 is a view corresponding to FIG. 2 illustrating a pair of angular ball bearings of a bearing unit in parallel combination according to a third modification of the present invention.
FIG. 19A is a schematic side view illustrating a first example in which the housing position adjustment mechanism includes a plurality of pressure chambers, and FIG. 19B is a schematic side view illustrating a second example in which the housing position adjustment mechanism includes a plurality of pressure chambers.
FIG. 20A is a schematic side view illustrating a third example in which the housing position adjustment mechanism includes a plurality of pressure chambers, and FIG. 20B is a schematic side view illustrating a fourth example in which the housing position adjustment mechanism includes a plurality of pressure chambers.
FIG. 21 is a schematic side view illustrating a fifth example in which the housing position adjustment mechanism includes a plurality of pressure chambers.
FIG. 22 is a cross-sectional view taken along a line XXII-XXII in FIG. 20A.
FIG. 23 is a view corresponding to FIG. 2 of a ball screw feeding device according to a fifth embodiment of the present invention.
FIG. 24 is a view corresponding to FIG. 2 of a ball screw feeding device according to a first modification of the fifth embodiment of the present invention.
FIG. 25 is a view corresponding to FIG. 2 of a ball screw feeding device according to a second modification of the fifth embodiment.
FIG. 26 is an enlarged view of a portion XXVI in FIG. 25.
FIG. 27 is a view corresponding to FIG. 2 of a ball screw feeding device according to a third modification of the fifth embodiment.
FIG. 28 is a view corresponding to FIG. 2 of a ball screw feeding device according to a fourth modification of the fifth embodiment.
FIG. 29A is an enlarged cross-sectional view corresponding to FIG. 2 in a phase in which an oil supply path is formed in a bearing housing side member to fill a pressure chamber with a working fluid, and FIG. 29B is a cross-sectional view illustrating a modification of a stopper bolt in FIG. 29A.
FIG. 30A is a cross-sectional view of a stopper plug used instead of the stopper bolt in FIG. 29A, FIG. 30B is a cross-sectional view illustrating an example in which the stopper plug in FIG. 30A and a disc-shaped member are combined, FIG. 30C is a cross-sectional view illustrating a modification of the disc-shaped member in FIG. 30B, and FIG. 30D is a cross-sectional view illustrating another modification of the disc-shaped member in FIG. 30B.
FIG. 31 is a cross-sectional view of a table feeding system of a machine tool to which a ball screw feeding device according to a modification of the present invention is applied.
FIG. 32 is a cross-sectional view illustrating a first example of the housing position adjustment mechanism in which a support base is disposed on an axial end side with respect to the bearing unit.
FIG. 33 is a cross-sectional view illustrating a second example of the housing position adjustment mechanism in which the support base is disposed on the axial end side with respect to the bearing unit.
FIG. 34 is a cross-sectional view illustrating a third example of the housing position adjustment mechanism in which the support base is disposed on the axial end side with respect to the bearing unit.
FIG. 35 is a cross-sectional view illustrating a fourth example of the housing position adjustment mechanism in which the support base is disposed on the axial end side with respect to the bearing unit.
FIG. 36 is a cross-sectional view illustrating a rotation support device according to the present invention.
FIG. 37 is a cross-sectional view illustrating another rotation support device according to the present invention.

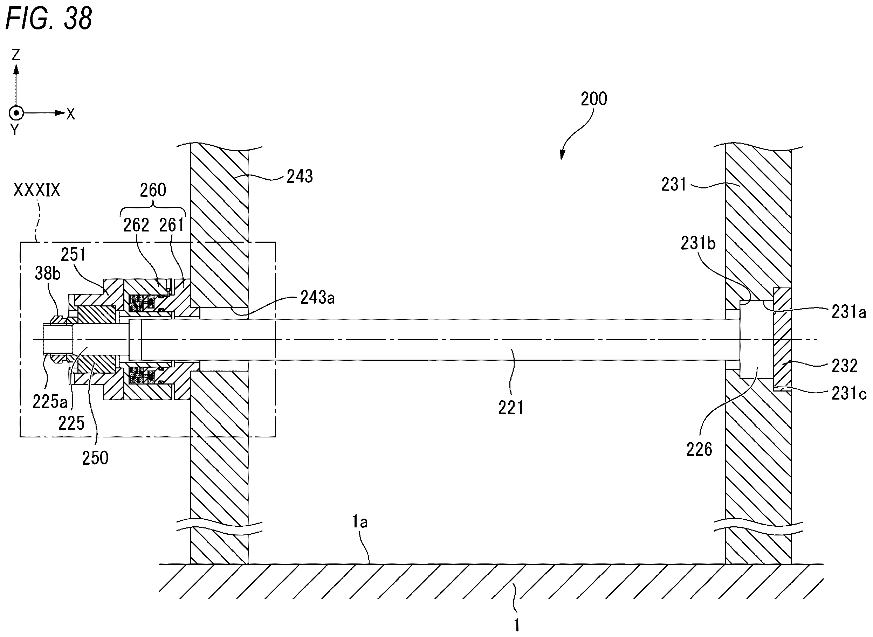

FIG. 38 is a cross-sectional view illustrating a shaft support device to which the support mechanism position adjustment mechanism according to the present invention is applied.

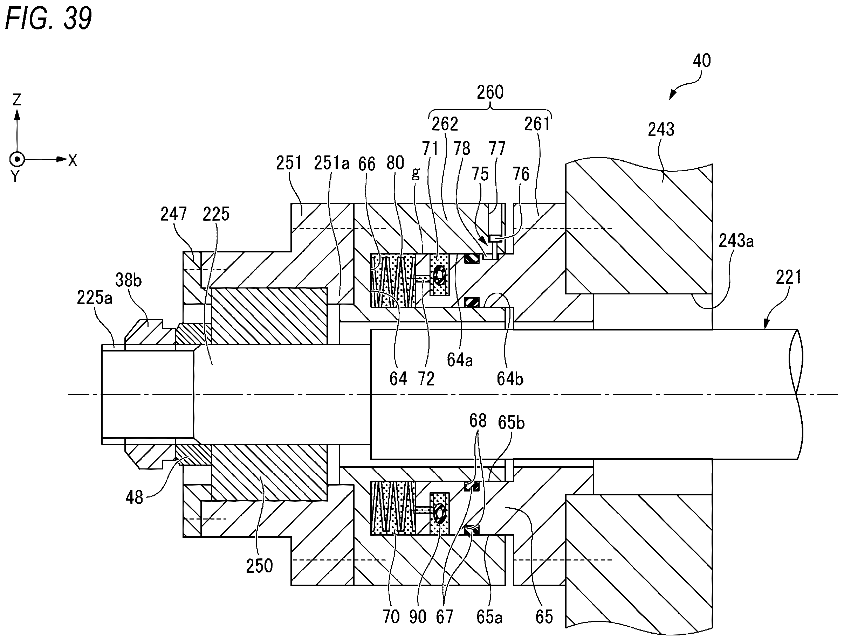

FIG. 39 is an enlarged view of a portion XXXIX in FIG. 38.

### DESCRIPTION OF EMBODIMENTS

Hereinafter, each embodiment of a ball screw feeding device as an example of a rotation support device and a shaft support device according to the present invention will be described in detail with reference to the drawings.

### (First Embodiment)

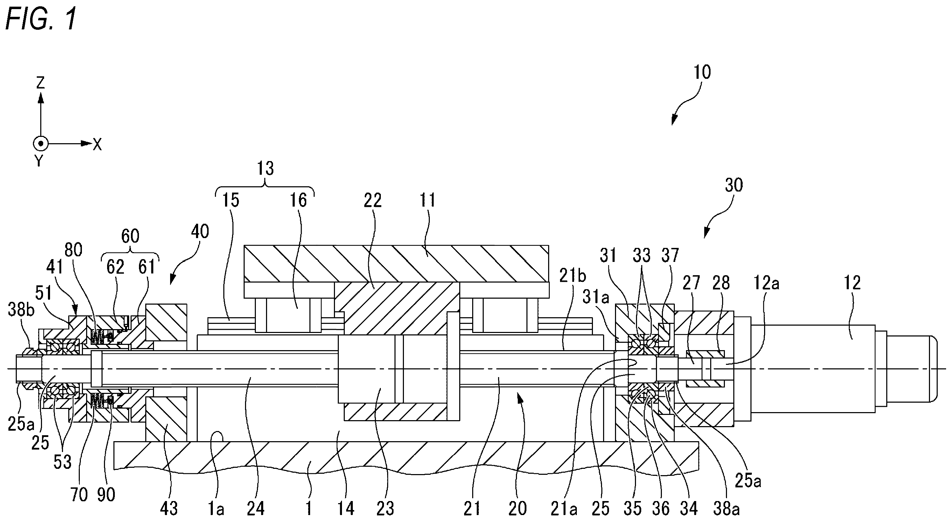

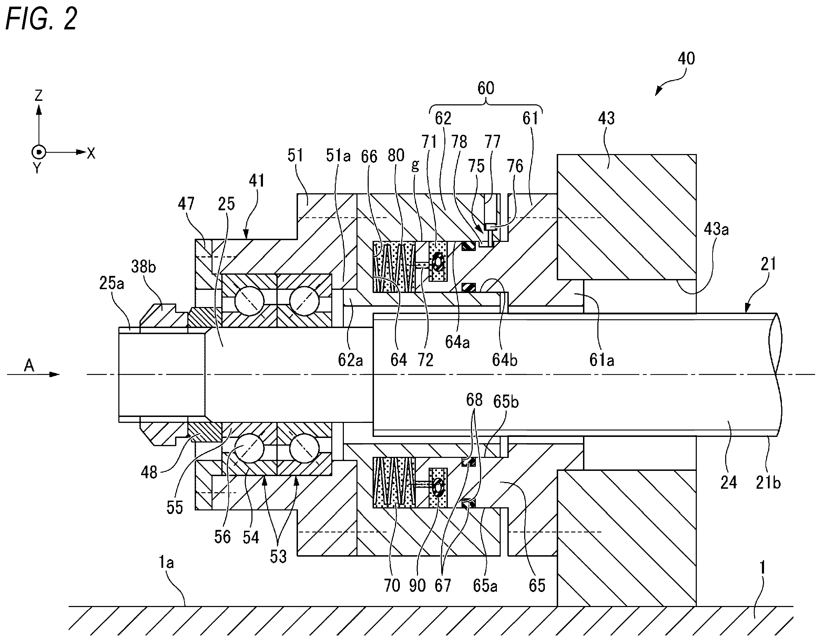

FIG. 1 illustrates a table feeding system of a machine tool to which a ball screw feeding device of a first embodiment is applied. Note that in FIGS. 1 to 3, an axial direction of a screw shaft 21 of a ball screw feeding device 20 (a left-right direction in FIG. 1) is defined as an X direction, a direction parallel to a mounting surface 1a of a base 1 and orthogonal to the axial direction of the screw shaft 21 (a direction perpendicular to a paper surface of FIG. 1) is defined as a Y direction, and a direction perpendicular to the mounting surface 1a of the base 1 (an upper-lower direction in FIG. 1) is defined as a Z direction. In FIG. 2 and each drawing corresponding to FIG. 2, a dotted line represents a bolt fastening portion.

A table feeding system 10 includes a moving table 11 fixed to a nut 23 of the ball screw feeding device 20, and is configured such that the moving table 11 is movable in the X direction by driving the screw shaft 21 of the ball screw feeding device 20 by a drive motor 12. The moving table 11 is provided with a pair of linear guides 13 (only one is illustrated in FIG. 1) on both sides of the ball screw feeding device 20 in the Y direction. Each linear guide 13 includes a guide rail 15 disposed on the base 1 in parallel with the screw shaft 21 via a rail mounting base 14, and two sliders 16 fixed to a lower surface of the moving table 11 and provided across the guide rail 15. When the screw shaft 21 is rotated by the drive motor 12, the moving table 11 is guided by the pair of linear guides 13 and linearly reciprocates together with the nut 23.

The ball screw feeding device 20 includes the screw shaft 21 having an outer peripheral surface formed with a spiral screw groove 21b, the nut 23 disposed around the screw shaft 21, having an inner peripheral surface formed with a spiral screw groove (not illustrated), and fitted to a nut housing 22 fixed to the lower surface of the moving table 11, and a plurality of balls (not illustrated) disposed between the screw groove of the nut 23 and the screw groove 21b of the screw shaft 21 in a freely rolling manner.

The screw shaft 21 is formed at a center in the axial direction, and includes a large-diameter portion 24 in which the screw groove 21b is formed, and small-diameter portions 25 formed at both ends in the axial direction of the large-diameter portion 24. A male screw 25a is formed on an outer peripheral surface on a tip side of the small-diameter portion 25, and a small-diameter shaft 27 is provided on a tip on one side (a right side in the drawing) of the screw shaft 21. A rotation shaft 12a of the drive motor 12 is connected to the small-diameter shaft 27 via a coupling 28.

For the screw shaft 21, one side of the screw shaft 21 to which the drive motor 12 is connected is supported by a first support mechanism 30 in a rotatable manner, and the other side (a left side in the drawing) of the screw shaft 21 is supported by the second support mechanism 40 in a rotatable manner.

The first support mechanism 30 includes a fixed side bearing housing 31 fixed to the base 1, and a pair of angular ball bearings 33, 33 that support the screw shaft 21 in a rotatable manner with respect to the fixed side bearing housing 31 and are arranged in front surface combination. Each of the pair of angular ball bearings 33, 33 includes an outer ring 34 fitted into the fixed side bearing housing 31, an inner ring 35 fitted onto the small-diameter portion 25 of the screw shaft 21, and a plurality of balls 36 arranged in a freely rolling manner between the outer ring 34 and the inner ring 35 with a contact angle.

In the pair of angular ball bearings 33, 33, the outer ring 34 of the angular ball bearing 33 on an inner side in the axial direction is brought into contact with an inward flange 31a of the fixed side bearing housing 31, and the outer ring 34 of the angular ball bearing 33 on an outer side in the axial direction is fixed by an outer ring retainer 37 fastened to the fixed side bearing housing 31. The inner ring 35 of the angular ball bearing 33 on the inner side in the axial direction is brought into contact with a step portion 21a between the large-diameter portion 24 and the small-diameter portion 25 of the screw shaft 21, and the inner ring 35 of the angular ball bearing 33 on the outer side in the axial direction is fastened by a fastening nut 38a screwed to the male screw 25a.

Therefore, the first support mechanism 30 supports the screw shaft 21 in a state in which a position in the axial direction of the screw shaft 21 is fixed.

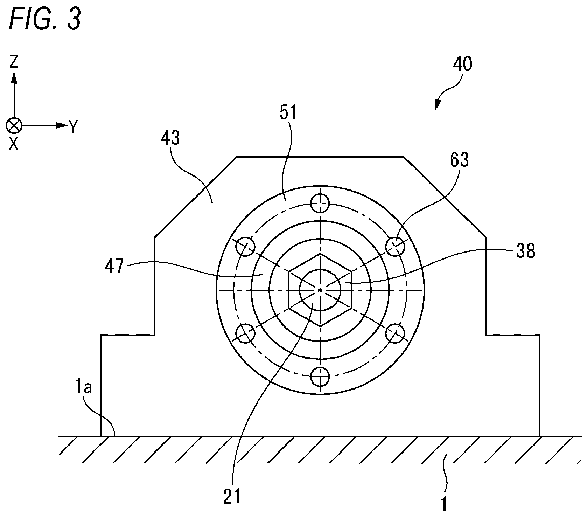

Referring also to FIGS. 2 and 3, the second support mechanism 40 includes a bearing unit 41 disposed at the end on the other side of the screw shaft 21, a support base 43 fixed to the base 1 on an axial center side of the bearing unit 41, and a housing position adjustment mechanism 60 disposed between the bearing unit 41 and the support base 43. The support base 43 is provided with a through hole 43a through which the screw shaft 21 penetrates.

The bearing unit 41 includes a movable side bearing housing 51 and a pair of angular ball bearings 53, 53 that support the screw shaft 21 in a rotatable manner with respect to the movable side bearing housing 51.

The pair of angular ball bearings 53, 53 include an outer ring 54 fitted into the movable side bearing housing 51, an inner ring 55 fitted onto the small-diameter portion 25 of the screw shaft 21, and a plurality of balls 56 arranged in a freely rolling manner between the outer ring 54 and the inner ring 55 with a contact angle.

In the pair of angular ball bearings 53, 53, the outer ring 54 of the angular ball bearing 53 on the inner side in the axial direction is brought into contact with an inward flange 51a of the movable side bearing housing 51, the outer ring 54 of the angular ball bearing 53 on the outer side in the axial direction is fastened by an outer ring retainer 47 fastened and fixed to the movable side bearing housing 51, and each of the outer rings 54, 54 is positioned in the axial direction with respect to the movable side bearing housing 51. The inner ring 55 of the angular ball bearing 53 disposed on the outer side in the axial direction is fastened by a fastening nut 38b screwed to the male screw 25a via a spacer 48.

That is, the pair of angular ball bearings 53, 53, the movable side bearing housing 51, and the outer ring retainer 47 can be unitized as the bearing unit 41 in a state in which a predetermined preload is applied to the pair of angular ball bearings 53, 53 arranged in front surface combination, and the bearing unit 41 can be easily attached to the screw shaft 21 and the housing position adjustment mechanism 60. In this configuration, the movable side bearing housing 51 can be integrated with the bearing housing side member 62 as necessary.

The housing position adjustment mechanism 60 includes a support base side member 61 that is provided on the support base 43 side and through which the screw shaft 21 penetrates, and a bearing housing side member 62 that is provided on the movable side bearing housing 51 side and is movable relative to the support base side member 61 in the axial direction. The support base side member 61 and the bearing housing side member 62 face each other in the axial direction.

The support base side member 61 is fixed to the support base 43 with a plurality of bolts (not illustrated) by fitting an annular portion 61a protruding toward the support base 43 side to the through hole 43a of the support base 43. The bearing housing side member 62 is fixed to the movable side bearing housing 51 with a plurality of bolts 63 (see FIG. 3) by fitting an annular portion 62a protruding toward the movable side bearing housing 51 side to the inward flange 51a.

A side surface of the bearing housing side member 62 on the support base side member 61 side is provided with a bottomed annular concave portion 64 that opens to the support base side member 61 side (one side in the axial direction). On the other hand, a side surface of the support base side member 61 on the bearing housing side member 62 side is provided with an annular convex portion 65 protruding into the annular concave portion 64 toward the bearing housing side member 62 side (the other side in the axial direction). The annular concave portion 64 and the annular convex portion 65 are fitted so as to be slidable in the axial direction, and an annular pressure chamber 66 is formed between a bottom surface, the inward surface 64a, and the outward surface 64b of the annular concave portion 64 and a tip surface of the annular convex portion 65.

An annular storage chamber 71 is formed in the annular convex portion 65, and an orifice 72 along the axial direction is formed on at least one place (two places in FIG. 2) in a circumferential direction so as to establish communication between the storage chamber 71 and the pressure chamber 66.

The storage chamber 71 is opened to an outward surface 65a of the annular convex portion 65 on the tip surface side of the annular convex portion 65 with respect to a groove in which the O-ring 67 is disposed, which will be described later, and is formed in a disc groove shape.

A working fluid, such as a hydraulic oil 70, is accommodated in a compressed state in the pressure chamber 66, the storage chamber 71, and the orifice 72, and the hydraulic oil 70 flows through the pressure chamber 66, the storage chamber 71, and the orifice 72, including a gap g between the outward surface 65a of the annular convex portion 65 and the inward surface 64a of the annular concave portion 64.

In the pressure chamber 66, a plurality of disc springs 80, which are elastic members, are arranged in a compressed state between opposite end surfaces in the axial direction of the support base side member 61 and the bearing housing side member 62, that is, between the bottom surface of the annular concave portion 64 and the tip surface of the annular convex portion 65. Therefore, a space in the pressure chamber 66 other than the plurality of disc springs 80 is filled with the hydraulic oil 70.

Further, a hollow member 90 configured to have a sealed structure is disposed in the storage chamber 71, and a space in the storage chamber 71 other than the hollow member 90 is filled with the hydraulic oil 70.

The hydraulic oil 70 is a working fluid that has an elastic effect when an external force is applied thereto, and whose rigidity has been industrially confirmed, and the rigidity is imparted thereto when compressed.

Specifically, it is known that a modulus of volume elasticity of a hydraulic oil is affected by gas contamination (see a non-patent literature: "Measurement of Modulus of Volume Elasticity of Hydraulic Oil", Hydraulics and Pneumatics, 1988, Vol. 19, No. 7, pp. 580-583, by Junichi Deshimaru and Hirohisa Tanaka), and in the present embodiment, even when there is a temperature rise of more than 4 degrees, types of the hydraulic oil and gas are appropriately selected so that desired axial rigidity is given to the screw shaft by a pressure acting on the bearing housing side member 62 when the pressure chamber 66 expands in the axial direction in response to the shaft extension of the screw shaft 21.

Note that the working fluid is not limited to oil, but may be any liquid such as water, or gas, as long as the working fluid has an elastic effect and exhibits rigidity when compressed.

Further, in addition to the setting by a fastening amount of the fastening nut 38b, a size of the axial load applied to the screw shaft 21 by the working fluid may be set in consideration of volume expansion due to a temperature rise of the working fluid caused by a temperature rise of the angular ball bearings 53, 53 or the screw shaft 21 during operation of the ball screw feeding device 20. In addition, the size of the axial load applied to the screw shaft 21 by the working fluid may be set in consideration of volume expansion due to a temperature rise of the working fluid caused by changes in an environment around the ball screw feeding device during the operation of the ball screw feeding device 20.

When the plurality of disc springs 80 function as series springs, as illustrated in FIG. 2, the plurality of disc springs 80 are arranged in a manner of overlapping each other in the axial direction such that convex surfaces of adjacent disc springs face each other and concave surfaces thereof face each other. When the plurality of disc springs 80 function as parallel springs, although not illustrated, the disc springs 80 are arranged to overlap each other in the same orientation with respect to the axial direction.

The hollow member 90 is a swim ring-shaped structure formed in an annular shape and having an elliptical cross-sectional shape with an inner diameter larger than that of the outward surface 64b of the annular concave portion 64 and an outer diameter smaller than that of the inward surface 64a of the annular concave portion 64, and is made by an elastically deformable rubber, resin, metal, or the like, or a combination thereof. The hollow member 90 contains any liquid or gas that has an elastic effect when an external force is applied and has industrially confirmed rigidity.

However, from a viewpoint of ease of assembly, it is preferable that the hollow member 90 be divided into a plurality of parts in the circumferential direction.

Further, an O-ring 67 is mounted between an outward surface 65a of the annular convex portion 65 and the inward surface 64a of the annular concave portion 64, and between an inward surface 65b of the annular convex portion 65 and the outward surface 64b of the annular concave portion 64. Specifically, the O-ring 67 is disposed in an annular seal groove 68 formed in the outward surface 65a and the inward surface 65b of the annular convex portion 65, and comes into sliding contact with the inward surface 64a and the outward surface 64b of the annular concave portion 64 opposite to each other to seal a radial gap between the outward surface 65a of the annular convex portion 65 and the inward surface 64a of the annular concave portion 64 and a radial gap between the inward surface 65b of the annular convex portion 65 and the outward surface 64b of the annular concave portion 64. Note that the seal groove 68 may be formed on the inward surface 64a and the outward surface 64b of the annular concave portion 64. Although the O-rings 67 and the seal grooves 68 are provided between opposite surfaces, respectively, a plurality of O-rings and a plurality of seal grooves may be provided. As a result, the O-rings 67 prevent leakage of the hydraulic oil 70 with which the pressure chamber 66 and the storage chamber 71 are filled. The O-ring 67 may be subjected to a surface treatment having wear resistance or the like from a viewpoint of preventing wear.

A rotation prevention mechanism 75 is provided between the support base side member 61 and the bearing housing side member 62 to prevent relative rotation therebetween. Specifically, for example, a through hole 77 penetrating in a radial direction is formed on at least one place in a circumferential direction of the bearing housing side member 62 such that a tip of a positioning pin 76 protrudes from the inward surface 64a of the annular concave portion 64. The tip of the positioning pin 76 is inserted into a long hole 78 formed along the axial direction in the outward surface 65a of the annular convex portion 65 of the support base side member 61 so that the bearing housing side member 62 can move in the axial direction. Note that the positioning pin 76 may be replaced by inserting a positioning key (not illustrated) or the like in a rotation direction having a similar rotation prevention function into the long hole 78 so that the bearing housing side member 62 can be moved in the axial direction.

Such a housing position adjustment mechanism 60 accommodates the hydraulic oil 70 and the plurality of disc springs 80 in the pressure chamber 66 and accommodates the hydraulic oil 70 and the hollow member 90 in the storage chamber 71, and then fastens the fastening nut 38b to push the bearing housing side member 62 toward the support base side member 61 side via the pair of angular ball bearings 53, 53 and the movable side bearing housing 51. In this way, the hydraulic oil 70 is compressed, and a pressure in a screw shaft direction is applied to the hydraulic oil 70, and the plurality of disc springs 80 are compressed, and a pressure in the screw shaft direction is applied to the plurality of disc springs 80, and further, the hollow member 90 is compressed, and a pressure in the screw shaft direction is also applied to the hollow member 90.

On the other hand, since the support base side member 61 is fixed to the base 1 via the support base 43, the bearing housing side member 62 and the movable side bearing housing 51 are pressed to the left direction in the drawing by the pressures of the hydraulic oil 70 and the plurality of disc springs 80 accommodated in the pressure chamber 66 in a compressed state, and the hydraulic oil 70 and the hollow member 90 accommodated in the storage chamber 71 in a compressed state. As a result, a state is provided in which a tension to the left direction in FIGS. 1 and 2 is applied to the screw shaft 21 in advance.

The pressures of the hydraulic oil 70 and the plurality of disc springs 80 accommodated in the pressure chamber 66, and the pressures of the hydraulic oil 70 and the hollow member 90 accommodated in the storage chamber 71 can each be controlled to any desired size by the fastening amount of the fastening nut 38b. That is, the size of the axial load applied to the screw shaft 21 can be freely set by the fastening nut 38b.

Further, as described above, in addition to the setting by the fastening amount of the fastening nut 38b, the size of the axial load applied to the screw shaft 21 by the hydraulic oil 70 can be set in consideration of the volume expansion due to a temperature rise of the hydraulic oil 70 during operation of the ball screw feeding device 20.

Next, functions of the ball screw feeding device 20 of the present embodiment will be described.

In the ball screw feeding device 20, when the screw shaft 21 is driven to rotate by the drive motor 12 and the moving table 11 fixed to the nut 23 is linearly reciprocated, the drive motor 12, the angular ball bearing 33,53, the nut 23, and the like generate heat along with the reciprocating motion, a temperature of the ball screw feeding device 20 gradually rises, and the screw shaft 21 extends in the axial direction due to thermal expansion.

When the screw shaft 21 extends in the axial direction due to thermal expansion, in the ball screw feeding device 20 of the present embodiment illustrated in FIG. 1, since a right end of the screw shaft 21 is fixed to the fixed side bearing housing 31 via the angular ball bearings 33, 33, the screw shaft 21 extends in the left direction. When the screw shaft 21 extends in the axial direction (left direction) due to an influence of heat, the bearing unit 41 and the bearing housing side member 62 move in the same direction following the extension of the screw shaft 21 in the axial direction due to thermal expansion by an interaction between the pressures of the hydraulic oil 70 and the plurality of disc springs 80 accommodated in the pressure chamber 66 and the pressures of the hydraulic oil 70 and the hollow member 90 accommodated in the storage chamber 71.

In the present embodiment, even when the screw shaft 21 extends in the axial direction, the hydraulic oil 70, the plurality of disc springs 80 and the hollow member 90 are designed to continuously press the bearing unit 41 and the bearing housing side member 62 to the left direction. The hydraulic oil 70, the pressure chamber 66 and the storage chamber 71 have a high degree of freedom in design, and by appropriately selecting physical properties of the hydraulic oil 70 accommodated in the pressure chamber and sizes and shapes of the pressure chamber and the storage chamber, the pressure of the hydraulic oil 70 can be exerted in addition to the pressures of the plurality of disc springs 80 and the hollow member 90, thereby providing a sufficient and appropriate load in response to longer extension of the shaft. Therefore, even when the temperature of the ball screw feeding device 20 rises by more than 4 degrees, support rigidity in the axial direction can be maintained by moving the pair of angular ball bearings 53, 53 in the axial direction, and rigidity in the axial direction of the ball screw feeding device 20 is stabilized.

Especially, since the hydraulic oil 70 can flow through the pressure chamber 66 and the storage chamber 71 via the orifice, the plurality of disc springs 80, the hollow member 90, and the hydraulic oil 70 can share the load pressing against the bearing unit 41 and the bearing housing side member 62, and can be designed to change in response to the extension in the axial direction of the screw shaft 21 even when the temperature rises by more than 4 degrees. As a result, while the screw shaft 21 extends in the axial direction, the pair of angular ball bearings 33, 33 are maintained as fixed supports, and the rigidity in the axial direction of the ball screw feeding device 20 is stabilized.

In the case of the present embodiment, since an excessive load does not act on the pairs of angular ball bearings 33, 33 and 53, 53, there is no risk that excessive wear, seizure, or the like due to poor lubrication occurs, and lifetimes of the pairs of angular ball bearings 33, 33 and 53, 53 become long.

That is, in the present embodiment, since it is not necessary to apply a pre-tension having a size as that applied by the spacer in the ball screw described in Patent Literature 1 to the screw shaft 21, an excessive load does not act on the pairs of angular ball bearings 33, 33 and 53, 53.

Further, in the ball screw feeding device 20 of the present embodiment, it is not necessary to install an external device such as an accumulator or a pump for supplying the hydraulic oil 70 to the pressure chamber 66 and the storage chamber 71, and the housing position adjustment mechanism 60 can be simplified. As a result, the pressure in the pressure chamber 66 and the storage chamber 71 can be maintained with as little change as possible without consuming energy supplied from outside.

The O-rings 67 of the present embodiment also act as damping mechanisms. That is, when a workpiece placed on the moving table 11 is machined, the screw shaft 21 having relatively low rigidity also tends to vibrate due to vibration generated in the moving table 11. The vibration of the screw shaft 21 is also transmitted to the bearing housing side member 62 via the pair of angular ball bearings 33, 33 and the movable side bearing housing 51, but the vibration of the bearing housing side member 62 is damped by the O-rings 67 between the bearing housing side member 62 and the support base side member 61. Therefore, the vibration of the screw shaft 21 can also be damped, and disturbance of machined surface quality of the workpiece placed on the moving table 11 can be prevented.

In this case, the O-rings 67 arranged between the bearing housing side member 62 and the support base side member 61 can damp not only the vibration in the axial direction of the screw shaft 21 but also vibration in the radial direction of the screw shaft 21.

The hydraulic oil 70 of the housing position adjustment mechanism 60 is stored not only in the pressure chamber 66, the storage chamber 71, and the orifice 72, but also in gaps between the outward surface 65a of the annular convex portion 65 and the inward surface 64a of the annular concave portion 64 and between the inward surface 65b of the annular convex portion 65 and the outward surface 64b of the annular concave portion 64, and on the pressure chamber 66 side of the O-ring 67. Therefore, when the hydraulic oil 70 is compressed, a pressure acts on the hydraulic oil 70 not only in the axial direction but also in the radial direction. Therefore, the bearing housing side member 62 is supported with a sufficient and appropriate load in the radial direction with respect to the support base side member 61.

As a result, the housing position adjustment mechanism 60 can provide the support rigidity in the radial direction to the screw shaft 21 via the pair of angular ball bearings 53, 53 and the bearing housing 51, and can also have an alignment function with respect to the screw shaft 21.

When the above-mentioned axial extension of the screw shaft 21 occurs, even when vibration occurs due to elastic deformation when the disc springs 80 and the hollow member 90 return to the compressed state, the O-ring 67 can dampen this vibration.

Further, when the disc springs 80 and the hollow member 90 return to the compressed state, the hydraulic oil 70 passes through the orifice 72 and the gap g between the outward surface 65a of the annular convex portion 65 and the inward surface 64a of the annular concave portion 64, thereby damping this vibration. Therefore, similarly to the O-rings 67 described above, when the workpiece placed on the moving table 11 is machined, the vibration transmitted to the screw shaft 21 can be damped, and the disturbance of the machined surface quality of the workpiece can be further prevented.

The hydraulic oil 70 in the pressure chamber 66 exerts an orifice effect by passing through tiny gaps that are formed between the disc springs 80 or at contact parts between the disc springs 80 and an inner surface of the pressure chamber 66, thereby damping the vibration of the screw shaft 21 and the plurality of disc springs 80 described above.

Therefore, according to the ball screw feeding device 20 of the present embodiment, by accommodating the hydraulic oil 70 and the plurality of disc springs 80 in the pressure chamber 66, accommodating the hydraulic oil 70 and the hollow member 90 in the storage chamber 71, and allowing the pressure chamber 66 to communicate with the storage chamber 71 via the orifice 72, even when an axial length of the screw shaft 21 changes due to the influence of heat, the support rigidity in the axial direction can be continuously and stably maintained, and the vibration in the axial direction and the radial direction can be damped.

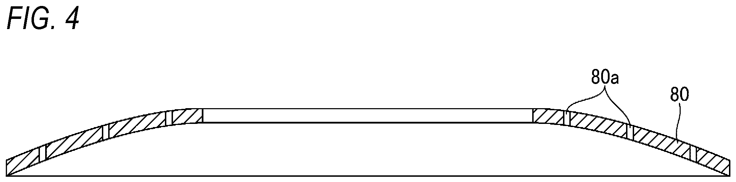

Note that as illustrated in FIG. 4, the disc-shaped disc springs 80 may have a plurality of through holes 80a that penetrate a conical plate in the axial direction, and may also be formed with a plurality of slits (not illustrated). In this way, the disc springs 80 also function as orifices, and the hydraulic oil 70 flows through the plurality of through holes 80a or slits, thereby further exerting the damping effect.

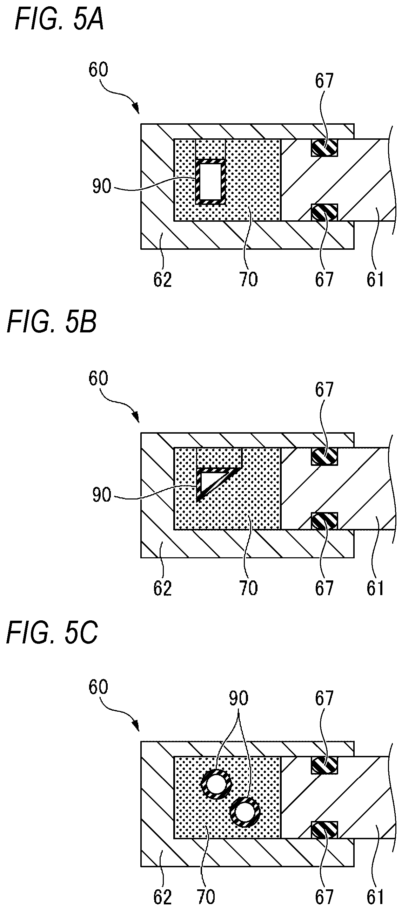

In the above embodiment, the hollow member 90 has an elliptical cross section, but is not limited thereto, and may have a rectangular cross section as shown in FIG. 5A or a triangular cross section as shown in FIG. 5B. In the above embodiment, the hollow member 90 is formed in an annular shape, but is not limited thereto, and may be formed in one or more spherical shapes as shown in FIG. 5C, in semicircular arc shapes (not illustrated), or the like.

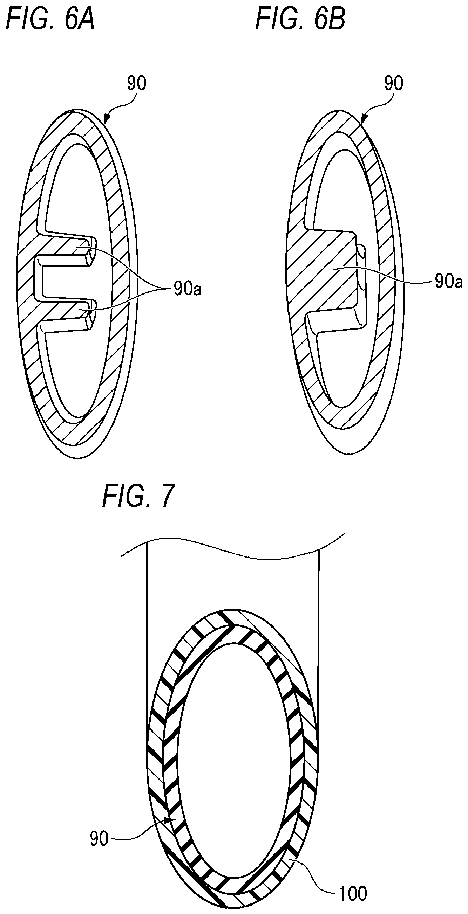

FIG. 6A and FIG. 6B are cross-sectional views of the hollow member 90 formed in an annular shape according to modifications of the present embodiment. As in these modifications, the hollow member 90 may include at least one rib 90a protruding from an inner peripheral surface thereof. The rib 90a may be formed in an annular shape around the entire circumference of the hollow member 90, or may be formed partially in a circumferential direction of the hollow member 90. It is sufficient as long as the rib 90a is formed on a part of the ring-shaped cross section in the circumferential direction.

Since the hollow member 90 includes such a rib 90a, when the hollow member 90 is compressed and deformed due to the pressure generated in the storage chamber 71, the rib 90a and an inner peripheral surface opposite to the rib 90a come into contact with each other, so that it is possible to prevent the hollow member 90 from being excessively deformed, such as to an extent of being plastically deformed. Accordingly, it is possible to prevent liquid or gas contained in the hollow member 90 from leaking out into the storage chamber 71.

Note that the rib 90a may be applied to a hollow member having a shape other than an annular shape, and may be formed inside a spherical or semicircular hollow member described above, for example.

Further, as in a modification illustrated in FIG. 7, the hollow member 90 may be provided with at least one outer layer 100 that covers (molds) the entire surface. Accordingly, the rigidity of the hollow member 90 can be changed, and the surface of the hollow member 90 can be protected from the working fluid such as the hydraulic oil 70.

Note that the outer layer 100 may be made of the same material as the hollow member, but may also be made of other materials.

Further, in the above embodiment, the hollow member 90 is molded seamlessly and integrally, and thus local stress concentration is unlikely to occur, and the hollow member 90 can be easily manufactured. The hollow member 90 is not limited to being molded integrally, and may be, for example, a joined body having a hollow cross section constituted by integrating two or more members via edges of the two or more members. Alternatively, the hollow member 90 may form a hollow cross section by bending a member and joining edges of the member.

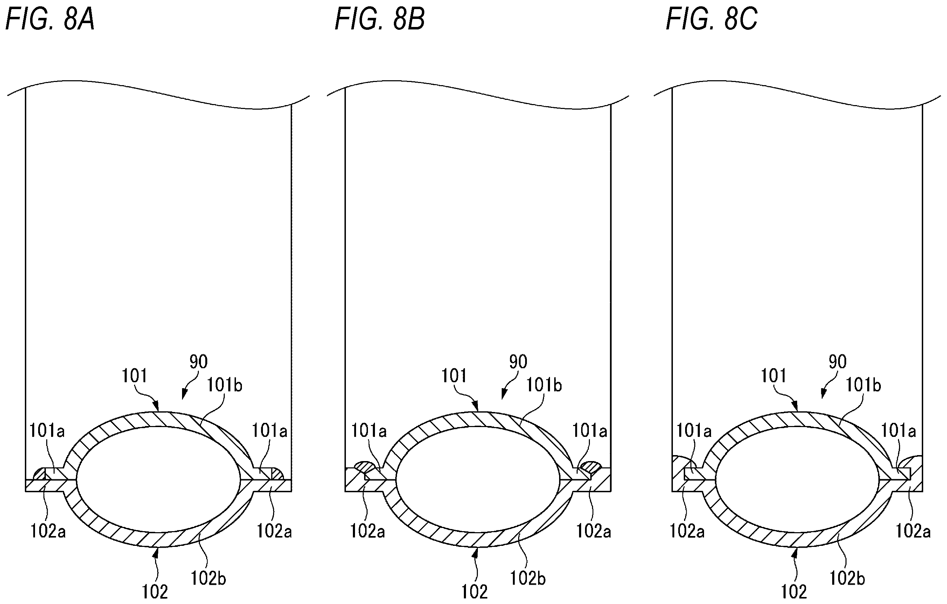

Specifically, in a modification based on a ring-shaped member as illustrated in FIGS. 8 to 10, the hollow member 90 is a joined body having a hollow cross section, which is constituted by joining and integrating two or more ring-shaped members 101,102 via ribs 101a and 102a formed on both peripheral edges of the ring-shaped members 101, 102. As a method for joining the ring-shaped members 101, 102, an appropriate method may be selected from adhesion, melt bonding, connection by a mechanical lock mechanism, and the like.

For example, as illustrated in FIGS. 8A to 8C, the hollow member 90 is constituted by an outer diameter side ring-shaped member 101 and an inner diameter side ring-shaped member 102 which are divided into two in the radial direction, and a hollow cross section is formed by arc-shaped portions 101b, 102b of the ring-shaped members 101, 102. In FIGS. 8A and 8B, one of the ribs 101a and 102a is made longer than the other, and the ribs 101a and 102a are joined to each other by adhesion or melt bonding, and in particular, as illustrated in FIG. 8B, the rib 102a may cover a side surface of the shorter rib 101a by bending a tip of the longer rib 102a. Further, as illustrated in FIG. 8C, the longer rib 102a and the shorter rib 101a may be joined by a continuous or discontinuous U-shaped fastening structure so that the tip of the longer rib 102a covers the tip of the shorter rib 101a and inside thereof is sealed.

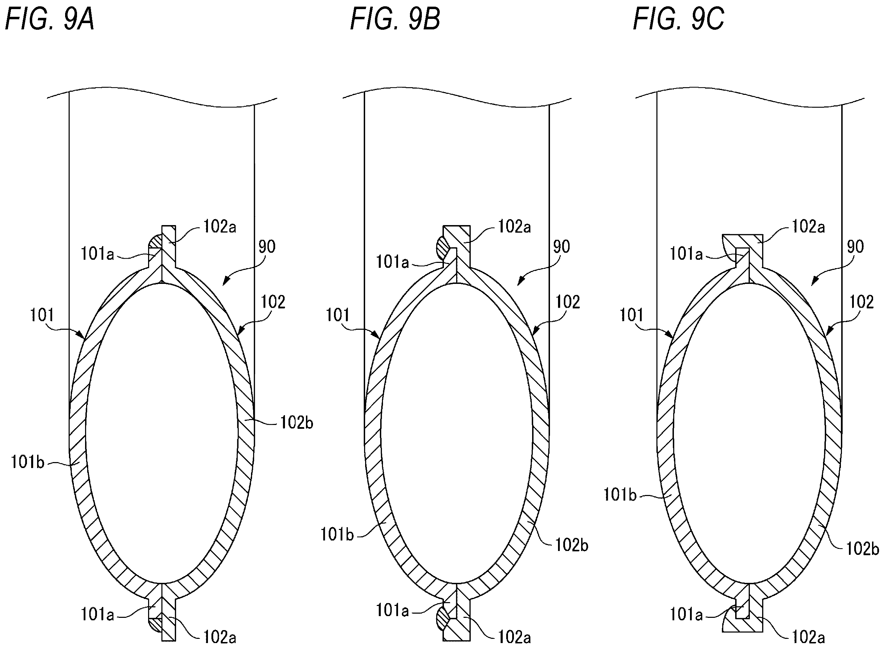

Alternatively, as illustrated in FIGS. 9A to 9C, the hollow member 90 is constituted by a left ring-shaped member 101 and a right ring-shaped member 102, which are divided into two in the axial direction, and a hollow cross section is formed by arc-shaped portions 101b, 102b of the ring-shaped members 101, 102. In FIGS. 9A and 9B, one of the ribs 101a and 102a is also made longer than the other, and the ribs 101a and 102a are joined to each other by adhesion or melt bonding, and in particular, as illustrated in FIG. 9B, the rib 102a may cover a side surface of the shorter rib 101a by bending a tip of the longer rib 102a. Further, as illustrated in FIG. 9C, the longer rib 102a and the shorter rib 101a may be joined by a continuous or discontinuous U-shaped fastening structure so that the tip of the longer rib 102a covers the tip of the shorter rib 101a and inside thereof is sealed.

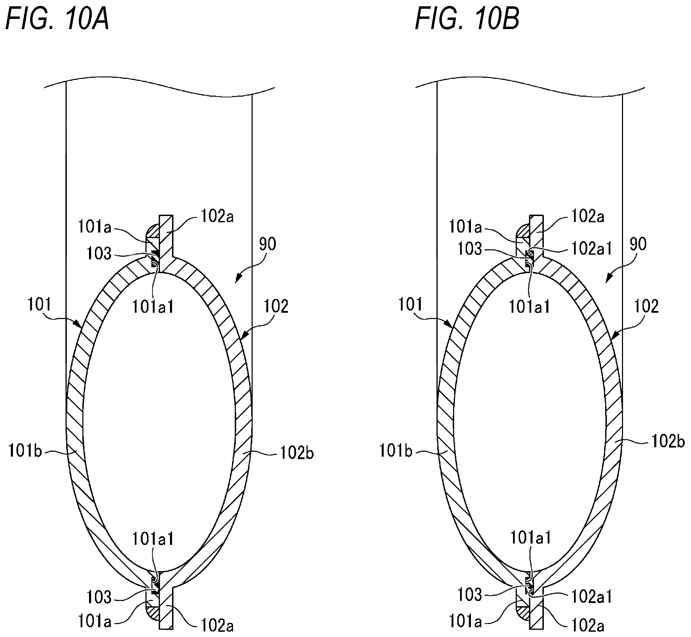

As illustrated in FIGS. 10A and 10B, the hollow member 90 may be formed with seal grooves 101a1, 102a1 in the vicinity of edges in at least one of surfaces opposite to the ribs 101a, 102a of the ring-shaped members 101, 102 divided into two (the rib 101a in FIG. 10A, and the ribs 101a, 102a in FIG. 10B), and a seal member such as an O-ring 103 may be disposed to improve a sealing property of the inside.

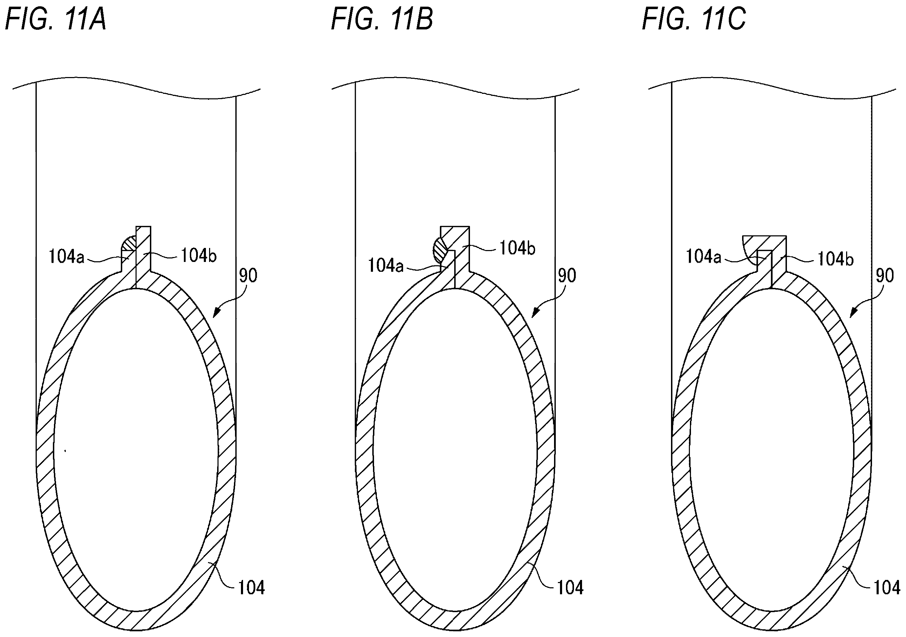

Further, in a modification based on a ring-shaped member as illustrated in FIGS. 11A to 11C, the hollow member 90 is constituted by bending a ring-shaped member 104 having a band-shaped cross section so as to form a hollow cross section over the entire circumference and joining the ribs 104a, 104b formed on a peripheral edge of the ring-shaped member 104. Also in this case, as a method for joining the ring-shaped member 104, an appropriate method may be selected from adhesion, melt bonding, connection by a mechanical lock mechanism, and the like.

That is, in FIGS. 11A and 11B, one of the ribs 104a and 104b is made longer than the other, and the ribs 104a and 104b are joined to each other by adhesion or melt bonding, and in particular, as illustrated in FIG. 11B, the rib 104b may cover a side surface of the shorter rib 104a by bending a tip of the longer rib 104b. Further, as illustrated in FIG. 11C, the longer rib 102a and the shorter rib 101a may be joined by a continuous or discontinuous U-shaped fastening structure so that the tip of the longer rib 104b covers the tip of the shorter rib 104a and inside thereof is sealed.

As described above, with the configurations illustrated in FIGS. 8A to 11C, the deformable hollow member 90 can be easily manufactured by a method other than the integral molding.

Note that the peripheral edges of the ring-shaped members 101, 102, 104 may not include the ribs 101a, 102a, 104a, and 104b as illustrated in FIGS. 8A to 11C. That is, the hollow member 90 may be constituted by joining the peripheral edges of the arc-shaped portions 101b, 102b of the ring-shaped member 101, 102 by an appropriate joining method, or the hollow member 90 may be constituted by joining the peripheral edges of curved portions of the ring-shaped member 104 by an appropriate joining method.

The configurations as illustrated in FIGS. 8A to 11C are not limited to being based on the ring-shaped members, and as illustrated in FIG. 4C, a planar member or a curved member for forming a spherical shape or a semicircular arc shape can also be applied.

In the above embodiment, the storage chamber 71 is formed on an outer diameter side so as to open to the outward surface 65a of the annular convex portion 65, but may also be formed on an inner diameter side so as to open to the inward surface 65b of the annular convex portion 65.

Further, a cross-sectional shape and a length of the orifice 72 may be freely set as long as the damping function can be exerted.

Although not illustrated, the support base side member 61 may be integrally formed with the support base 43, and the bearing housing side member 62 may also be integrally formed with the movable side bearing housing 51.

### (Second Embodiment)

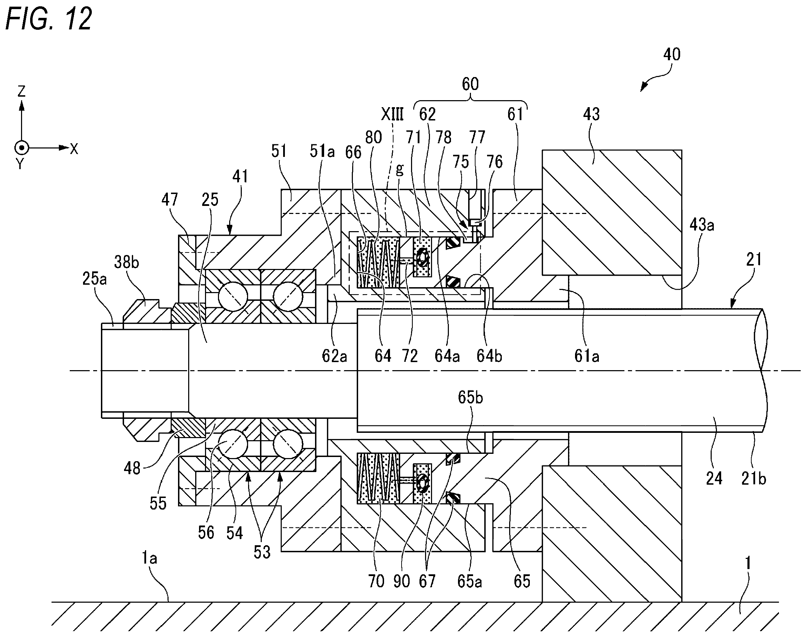

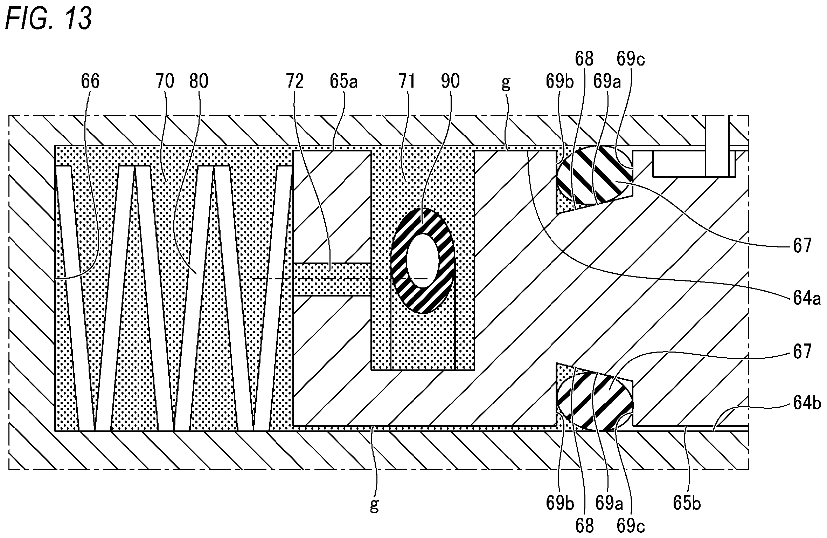

Next, a ball screw feeding device according to a second embodiment of the present invention will be described with reference to FIGS. 12 and 13. Note that in the present embodiment, the configuration of the housing position adjustment mechanism 60 of the second support mechanism 40 is different from that of the first embodiment.

In the housing position adjustment mechanism 60 of the second embodiment, the seal groove 68 formed on the outward surface 65a and the inward surface 65b of the annular convex portion 65 is configured by a tapered surface 69a whose groove depth decreases as a distance from the pressure chamber 66 side increases, and both side surfaces 69b, 69c in the axial direction having a circular ring shape extending along the radial direction from both end edges in the axial direction of the tapered surface 69a.

A distance in the axial direction between both side surfaces 69b, 69c in the axial direction is larger than a width in the axial direction of the O-ring 67 in a state of being elastically deformed and mounted in the seal groove 68. As a result, the hydraulic oil 70 that has passed through the gap g from the pressure chamber 66 flows around to the vicinity of a boundary between the side surface 69b in the axial direction having a large groove depth and the tapered surface 69a.

Therefore, as the pressure of the hydraulic oil 70 in the pressure chamber 66 increases and then the O-ring 67 is pushed toward the atmospheric pressure side by the hydraulic oil 70, a sealing property of the O-ring 67 is further improved by a wedge structure between the tapered surface 69a of the seal groove 68 and the opposite inward surface 64a or outward surface 64b of the annular concave portion 64. As a result, even when relative movement between the support base side member 61 and the bearing housing side member 62 occurs, leakage of the hydraulic oil 70 to the atmospheric pressure side can be prevented, and the axial rigidity of the ball screw feeding device 20 can be continuously maintained.

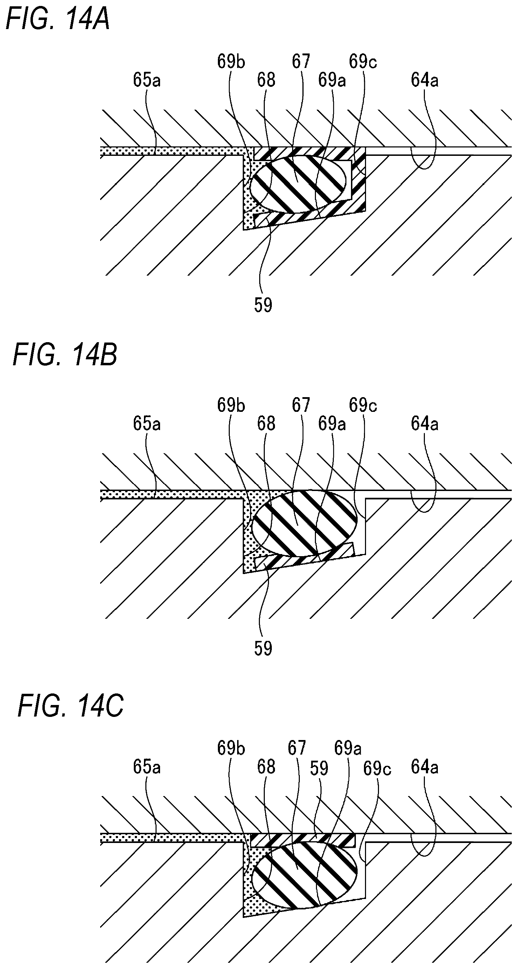

Note that as modifications of the present embodiment, as illustrated in FIGS. 14A to 14C, a wear-resistant member 59 may be interposed between the O-ring 67 and at least one of the inward surface 64a of the annular concave portion 64 and the outward surface 65a of the annular convex portion 65 (in the present embodiment, the tapered surface 69a of the seal groove 68 formed on the outward surface 65a).

Specifically, as illustrated in FIG. 14A, the wear-resistant member 59 may be formed as an annular member having a U-shaped cross section so as to be positioned between an outer peripheral surface of the O-ring 67 and the inward surface 64a of the annular concave portion 64 and between an inner peripheral surface of the O-ring 67 and the tapered surface 69a of the seal groove 68 formed on the outward surface 65a of the annular convex portion 65.

As illustrated in FIG. 14B, the wear-resistant member 59 may be formed as an annular member having a linear cross section so as to be positioned between the inner peripheral surface of the O-ring 67 and the tapered surface 69a of the seal grooves 68 formed on the outward surface 65a of the annular convex portion 65. Further, as illustrated in FIG. 14C, the wear-resistant member 59 may be formed as an annular member having a linear cross section so as to be positioned between the outer peripheral surface of the O-ring 67 and the inward surface 64a of the annular concave portion 64.

As the wear-resistant member 59, for example, a resin material such as fluorine-based resin or a metal material subjected to appropriate surface treatment is used.

In any form of FIGS. 14A to 14C, by using the wear-resistant member 59, stress concentration applied to the O-ring 67 can be dispersed, and damage such as wear of the O-ring 67 and a contact surface with the O-ring 67 can be prevented.

Note that as illustrated in FIG. 13, the wear-resistant member 59 may also be interposed between the O-ring 67 and at least one of the outward surface 64b of the annular concave portion 64 and the inward surface 65b of the annular convex portion 65 (in FIG. 13, the tapered surface 69a of the seal groove 68 formed on the inward surface 65b).

In FIGS. 14A to 14C, the wear-resistant member 59 is interposed between the O-ring 67 and a surface opposite to the O-ring 67 in the seal groove 68 having the tapered surface 69a. On the other hand, the above effect can also be achieved by interposing the wear-resistant member 59 between the O-ring 67 and the surface opposite to the O-ring 67 in the seal groove 68 having a uniform groove depth as illustrated in FIG. 2.

Other configurations and operations are similar as those of the first embodiment.

### (Third Embodiment)

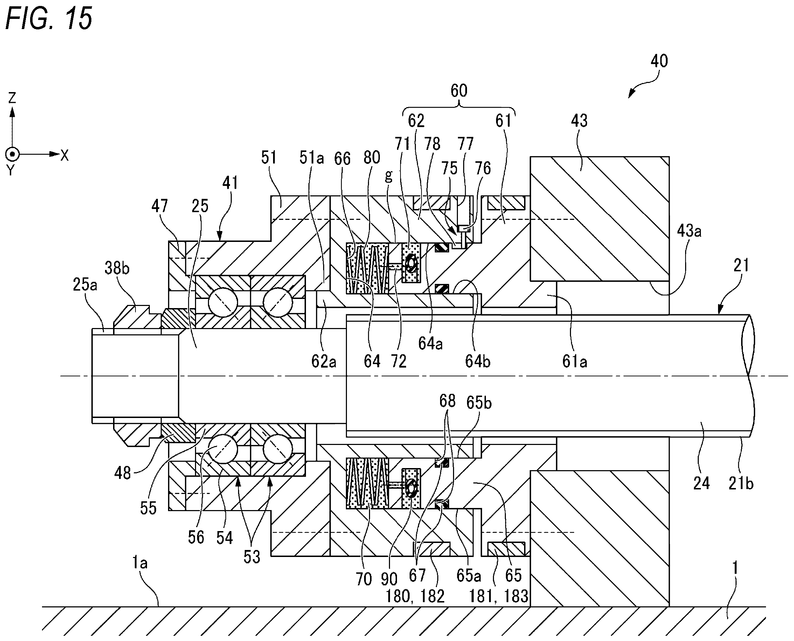

Next, a ball screw feeding device according to a third embodiment of the present invention will be described with reference to FIG. 15. Note that in the present embodiment, the configuration of the housing position adjustment mechanism 60 of the second support mechanism 40 is different from that of the first embodiment.

In the housing position adjustment mechanism 60 of the third embodiment, heating elements 180, 181 as working medium volume change units, such as a heating wire or a rubber heater, are annularly or discretely arranged on an outer peripheral surface of the support base side member 61 and an outer peripheral surface of the bearing housing side member 62.

Accordingly, heat from the heating elements 180 and 181 is transferred from the support base side member 61 and the bearing housing side member 62 to the hollow member 90 and the hydraulic oil 70 in the pressure chamber 66, and the hollow member 90 and the hydraulic oil 70 are heated, so that the volumes of the hollow member 90 and the hydraulic oil 70 can be expanded. As a result, even when the screw shaft 21 is extended in the axial direction, a load is excited in the pressure chamber 66 due to the volume expansion of the hollow member 90 and the hydraulic oil 70, so that the support rigidity in the axial direction can be maintained.

Note that in the present embodiment, the heating elements 180, 181 are attached as the working medium volume change units to the outer peripheral surface of the support base side member 61 and the outer peripheral surface of the bearing housing side member 62, but cooling media 182, 183 such as cooling jackets or cooling elements may be attached instead.

By using the cooling media 182 and 183, even when the load excited in the pressure chamber 66 becomes excessive due to the volume expansion of the hollow member 90 and the hydraulic oil 70, the hollow member 90 and the hydraulic oil 70 can be cooled and the volumes of the hollow member 90 and the hydraulic oil 70 can be contracted. Accordingly, the support rigidity of the ball screw feeding device 20 in the axial direction can be prevented from being excessively increased, and the support rigidity in the axial direction can be continuously maintained in a stable state.

In the present embodiment, since the temperatures of the hollow member 90 and the hydraulic oil 70 are affected by the components, an installation environment, an operation cycle, and the like of the ball screw feeding device 20, the hollow member 90 and the hydraulic oil 70 may be controlled to target temperatures by forming a feedback loop for the temperatures of the components, the hollow member 90, the hydraulic oil 70, and the like using the heating elements 180, 181 and the cooling media 182, 183. Further, in the present embodiment, operations of the heating elements 180, 181 and the cooling media 182, 183 may be feedback-controlled in consideration of the volume change of the hydraulic oil 70, a state of the pressures in the pressure chamber 66, relative displacement in the axial direction between the support base side member 61 and the bearing housing side member 62, and the like.

In the present embodiment, the working medium volume change units are attached to both the support base side member 61 and the bearing housing side member 62, but may be attached to either one of the support base side member 61 and the bearing housing side member 62.

Further, in the present embodiment, the working medium volume change units are provided on the outer peripheral surface of the support base side member 61 and the outer peripheral surface of the bearing housing side member 62, but the working medium volume change units can be attached to any position such as a side surface in the axial direction, an inner peripheral surface, or the inside thereof as long as the working medium volume change units can expand or contract the volumes of the hollow member 90 and the hydraulic oil 70 in the pressure chamber 66.

In addition, a heating element may be attached to either one of the support base side member 61 and the bearing housing side member 62, and a cooling medium may be attached to the other. The heating element and the cooling medium may be provided so as to coexist in both the support base side member 61 and the bearing housing side member 62.

Other configurations and operations are similar as those of the first embodiment.

### (Fourth Embodiment)

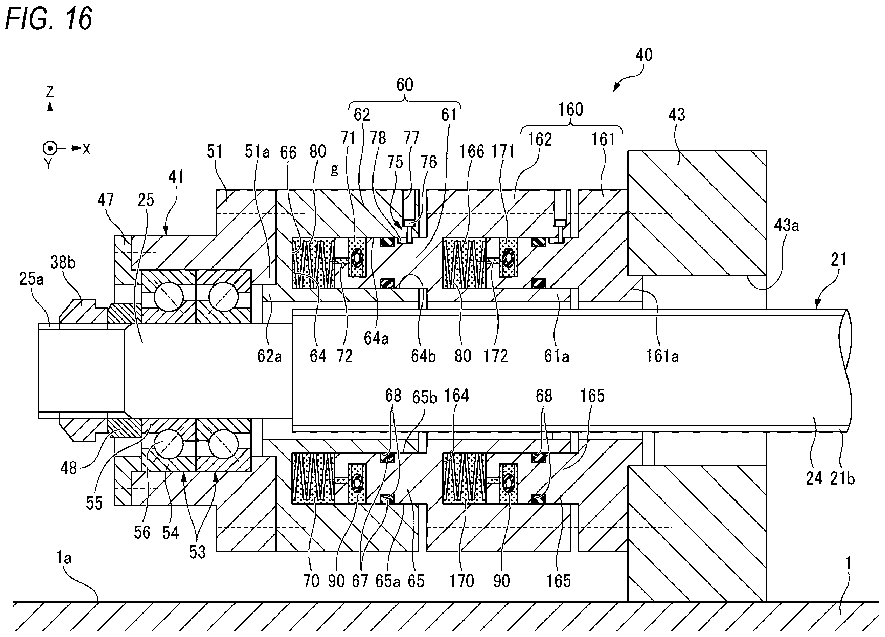

Next, a ball screw feeding device according to a sixth embodiment of the present invention will be described with reference to FIG. 16. Note that the present embodiment is different from the first embodiment in that the second support mechanism 40 further includes another housing position adjustment mechanism 160.

That is, the second support mechanism 40 of the fourth embodiment further includes another housing position adjustment mechanism 160 disposed adjacent to the housing position adjustment mechanism 60 between the bearing unit 41 and the support base 43.

The another housing position adjustment mechanism 160 includes another support base side member 161 provided on the support base 43 side and through which the screw shaft 21 penetrates, another bearing housing side member 162 provided on the bearing housing 51 side, through which the screw shaft 21 penetrates, and movable in the axial direction relative to the another support base side member 161, another working fluid 170 accommodated in another pressure chamber 166 formed between the another support base side member 161 and the another bearing housing side member 162, another storage chamber 171 formed in either one of the another support base side member 161 and the another bearing housing side member 162, and an orifice 172 allowing the another pressure chamber 166 to communicate with the another storage chamber 171, an elastic member 80 disposed in a compressed state between opposite end surfaces in the axial direction of the another support base side member 161 and the another bearing housing side member 162 in the another pressure chamber 166, and a hollow member 90 accommodated in the another storage chamber 171. That is, the second support mechanism 40 includes two housing position adjustment mechanisms 60, 160 having a tandem configuration arranged in series in the axial direction.

As shown in FIG. 16, in the another housing position adjustment mechanism 160, the another bearing housing side member 162 also includes an annular concave portion 164, and the another support base side member 161 also includes an annular convex portion 165 fitted into the annular concave portion 164 in a slidable manner in the axial direction. The plurality of disc springs 80 and the another working fluid 170 are arranged in the another pressure chamber 166 formed between the annular concave portion 164 and the annular convex portion 165. As the another working fluid 170, those exemplified as the hydraulic oil 70 are applicable.

In the present embodiment, the another support base side member 161 is fixed to the support base 43 with a plurality of bolts (not illustrated) by fitting an annular portion 161a protruding toward the support base 43 side to the through hole 43a of the support base 43. Further, the support base side member 61 of the housing position adjustment mechanism 60 and the another bearing housing side member 162 of the another housing position adjustment mechanism 160 are configured by two single members or integrally configured by connecting the two members.

As described above, since the two housing position adjustment mechanisms 60, 160 are arranged in series in the axial direction, even when the extension of the screw shaft is further increased, it is possible to stably maintain the axial rigidity of the ball screw feeding device 20, and it is also possible to improve aligning performance and the coaxial performance in the axial direction.

Note that the another housing position adjustment mechanism 160 is not limited to the same configuration as the housing position adjustment mechanism 60 as illustrated in FIG. 16, and may have any other configuration as long as a pressure generating unit that is accommodated in a compressed state in the pressure chamber 166 formed between the another support base side member 161 and the another bearing housing side member 162 is provided. For example, as the pressure generating unit, the hollow member 90 may be disposed in the another pressure chamber 166 instead of the elastic member such as a spring.

The second support mechanism 40 may have three or more housing position adjustment mechanisms in addition to the two housing position adjustment mechanisms 60, 160, and may have a configuration in which a plurality of housing position adjustment mechanisms are arranged in series in the axial direction.

Other configurations and operations are similar as those of the first embodiment.

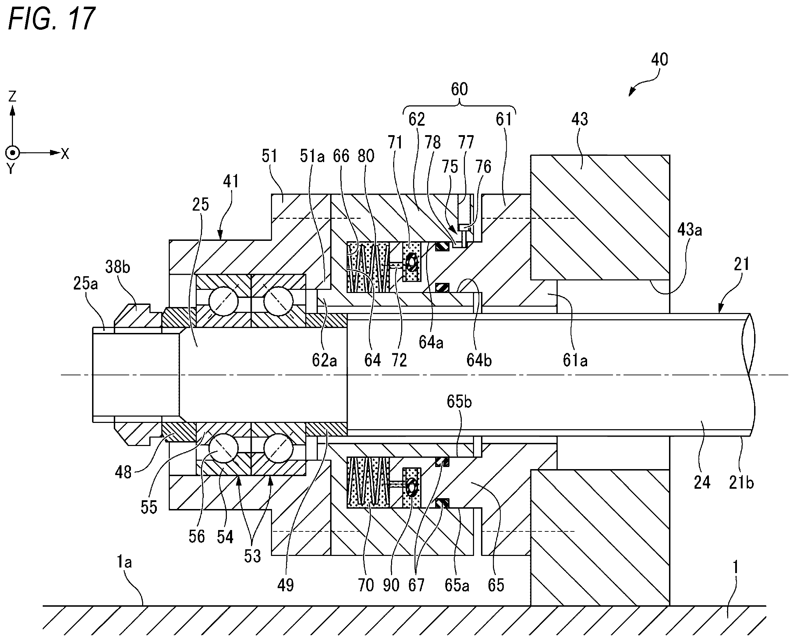

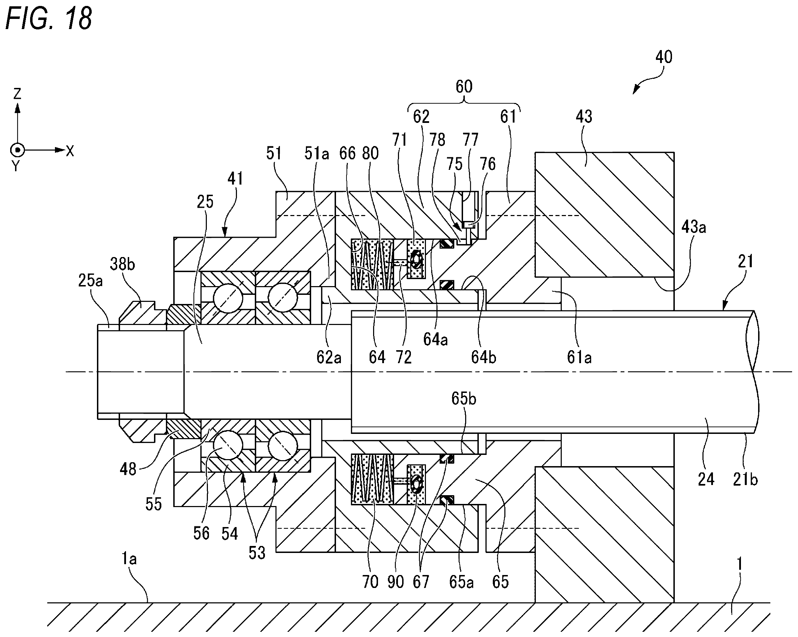

Note that in the first to fourth embodiments, the pair of angular ball bearings applied to the bearing unit of the second support mechanism are arranged in front surface combination, but the combination arrangement is not limited thereto. That is, the pair of angular ball bearings 53, 53 may be arranged in various support forms such as a back surface combination as illustrated in FIG. 17 or a parallel combination as illustrated in FIG. 18. Note that as illustrated in FIG. 17, when the pair of angular ball bearings 53, 53 are arranged in back surface combination, an inner ring spacer 49 may be disposed between the step between the large-diameter portion 24 and the small-diameter portions 25 of the screw shaft 21 and the inner ring 55 of the angular ball bearing 53 on an inner side in the axial direction.

The pair of angular ball bearings 33, 33 of the first support mechanism are also arranged in front surface combination, but may be arranged in various support forms such as back surface combination or parallel combination.

Further, although not illustrated, the angular ball bearings 33, 53 are not necessarily constituted by two angular ball bearings, and may be constituted by three or more angular ball bearings.

Further, in the above embodiment, the another housing position adjustment mechanism 160 is disposed adjacent to the housing position adjustment mechanism 60 in the axial direction, but the present invention is not limited thereto, and the another housing position adjustment mechanism 160 may be disposed adjacent to the housing position adjustment mechanism 60 in the radial direction in parallel.

In this way, it is easier to maintain the axial rigidity of the ball screw feeding device 20 in a state in which a larger axial load is generated than when a single housing position adjustment mechanism is disposed, while reducing an axial dimension of the ball screw feeding device 20.

Although the annular concave portion is provided in the bearing housing side member and the annular convex portion is provided in the support base side member in the above embodiment, the present invention is not limited thereto, and the annular concave portion may be provided in the support base side member and the annular convex portion may be provided in the bearing housing side member.

Further, in the above embodiment, the pressure chamber 66 and the storage chamber 71 are formed in an annular shape by the annular concave portion 64 and the annular convex portion 65, but a plurality of pressure chambers and a plurality of storage chambers may be formed by forming a plurality of concave portions and convex portions in the circumferential direction. In this case, the hydraulic oil and the elastic member are disposed in the plurality of pressure chambers, and the hydraulic oil and the hollow member are disposed in the storage chamber, and an O-ring is disposed between an inner peripheral surface of the concave portion and an outer peripheral surface of the convex portion, thereby providing a configuration that has a function of hydraulic oil leakage and damping.

In this case, an orifice that allows the storage chamber to communicate with the pressure chamber is also provided on each convex portion.

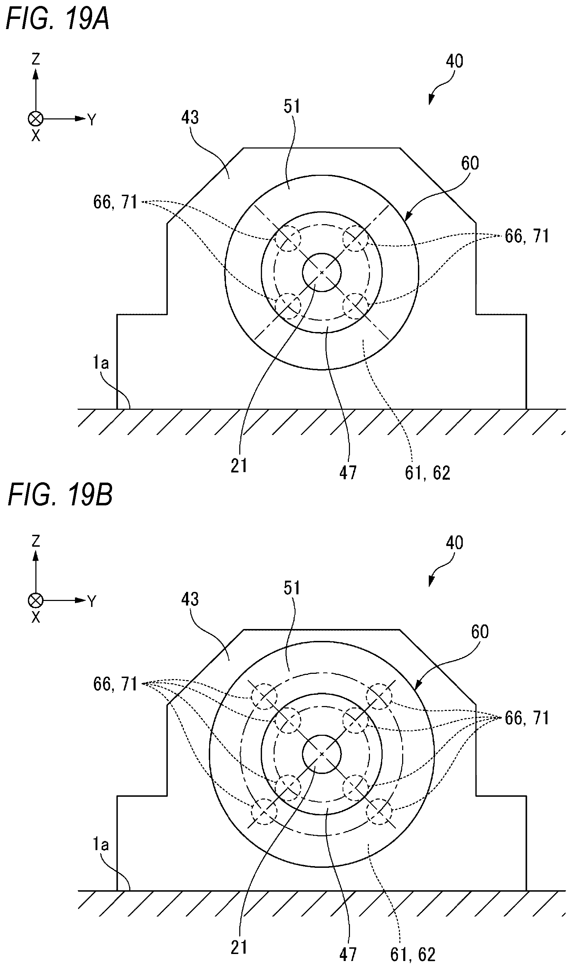

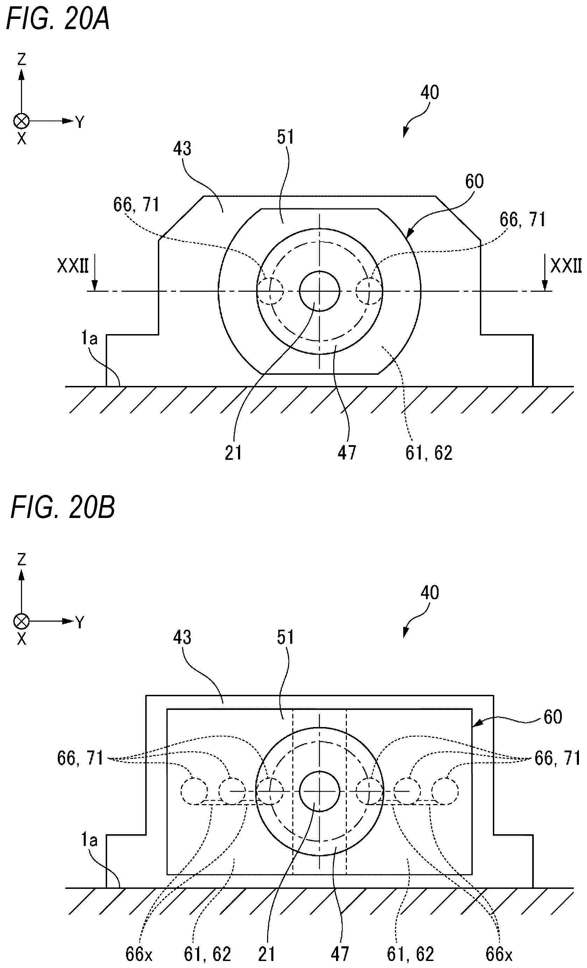

For example, as illustrated in FIG. 19A, the pressure chambers 66 and storage chambers 71 at four places may be arranged around the screw shaft 21 in the circumferential direction, and as illustrated in FIG. 19B, two pressure chambers 66 and storage chambers 71 arranged in parallel with and adjacent to each other in the radial direction may be provided at four places in the circumferential direction, that is, a total of eight pressure chambers 66 and storage chambers 71 may be arranged around the screw shaft 21. Alternatively, as illustrated in FIG. 20A, the pressure chambers 66 and storage chambers 71 arranged at two places in the circumferential direction, that is, the pressure chambers 66 and storage chambers 71 on both sides in the width direction (Y direction) with respect to the screw shaft 21 may be arranged around the screw shaft 21, and as illustrated in FIG. 20B, three pressure chambers 66 and storage chambers 71 arranged in parallel with and adjacent to each other in the radial direction (the width direction in the present example) may be provided at two places in the circumferential direction, that is, a total of six pressure chambers 66 and storage chambers 71 may be arranged around the screw shaft 21. In this case, height dimensions of the support base side member 61 and the bearing housing side member 62 can be reduced.

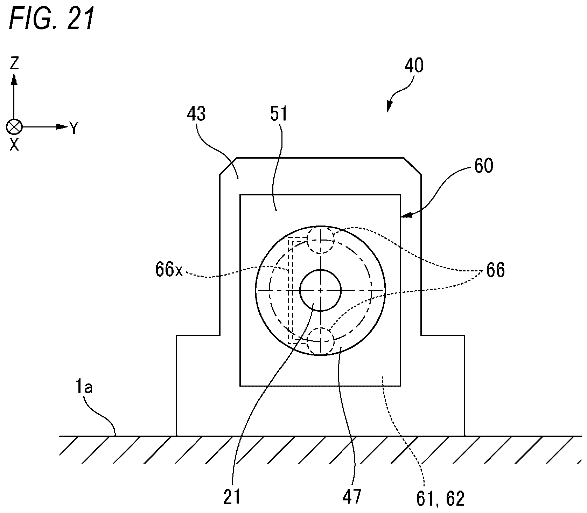

Further, as illustrated in FIG. 21, the pressure chambers 66 and storage chambers 71 arranged at two places in the circumferential direction, that is, the pressure chambers 66 and storage chambers 71 on both sides in the upper-lower direction with respect to the screw shaft 21 may be arranged around the screw shaft 21. In this case, width dimensions of the support base side member 61 and the bearing housing side member 62 can be reduced.

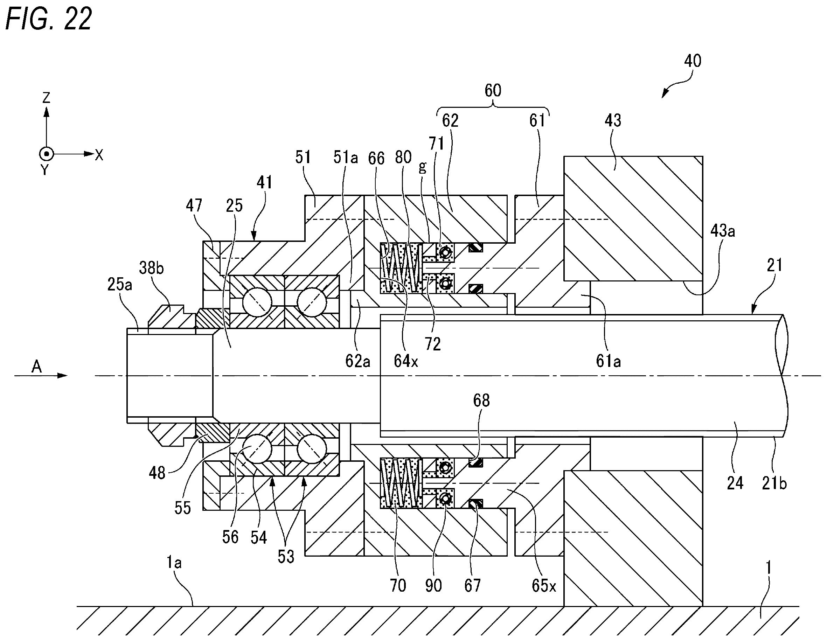

Here, FIG. 22 is a schematic cross-sectional view taken along a line XXII-XXII in FIG. 20A. In this case, the pressure chambers 66 and storage chambers 71 at two places are each formed by a concave portion 64x and a convex portion 65x.

Note that in the drawings, the convex portion 65x is formed integrally with a base of the support base side member 61, but may be formed separately from the base portion and joined thereto.

Note that the plurality of pressure chambers 66 and the plurality of storage chambers 71 can be freely arranged as long as the bearing unit 41 and the bearing housing side member 62 can stably move in the same direction following the extension in the axial direction of the screw shaft 21 due to thermal expansion, and specifically are preferably arranged point-symmetrically or line-symmetrically on a plane orthogonal to the screw shaft 21. The plurality of pressure chambers 66 and the plurality of storage chambers 71 may be arranged to be offset in the axial direction.

Further, the adjacent pressure chambers 66 or storage chambers 71 may be in communication with each other via a communication passage as necessary for the purpose of pressure equalization or the like, and a working fluid inside may flow through the pressure chambers 66 and the storage chambers 71.

For example, in FIG. 20B and FIG. 21, the adjacent pressure chambers 66 are in communication with each other via a communication passage 66x.

The support base side member 61 and the bearing housing side member 62 are not limited to being configured as a single member, and may be divided and configured to be arranged around the screw shaft 21 according to layout of the pressure chambers 66 and the storage chambers 71. Further, the support base side member 61 and the bearing housing side member 62, which are single members, may also be arranged around the screw shaft 21, and may be configured such that a part in the circumferential direction thereof is opened or divided.

For example, in FIG. 20B, the two support base side members 61 and the two bearing housing side members 62 are divided in the width direction with respect to the screw shaft 21.

In addition, similarly to the another housing position adjustment mechanism 160 described above, the pressure generating units in the plurality of pressure chambers 66 and storage chambers 71 are not limited to the same configuration, that is, the configuration in which the working fluid and the elastic member are arranged in the pressure chamber 66, and the working fluid and the hollow member are arranged in the storage chamber 71, and the pressure generating unit in any of the pressure chambers 66 may have another configuration such as using an elastic member such as a spring. Therefore, it is sufficient that the storage chamber 71 and the orifice 72 are formed in at least one of the plurality of convex portions 65x, and the convex portion 65x that is not formed with the storage chamber 71 or the orifice 72 may be provided.

A cross section of the concave portion or the convex portion constituting the pressure chamber 66 and the storage chamber 71 is not limited to a circular shape, and may have any shape such as a rectangular shape. Further, the plurality of pressure chambers 66 and storage chambers 71 can be configured to have any cross-sectional dimensions and axial dimensions.

### (Fifth Embodiment)

In the housing position adjustment mechanism 60 of the embodiments and the modifications described above, when the screw shaft 21 extends in the axial direction, the volume of the pressure chamber 66 increases, and the hydraulic oil 70 and the disc springs 80 in a compressed state in the pressure chamber 66 and the hydraulic oil 70 and the hollow member 90 in a compressed state in the storage chamber 71 press the bearing unit 41 and the bearing housing side member 62 to the left direction while gradually decreasing the pressures thereof. In this way, the pair of angular ball bearings 53, 53 are moved in the axial direction, and the support rigidity of the screw shaft 21 in the axial direction is maintained.

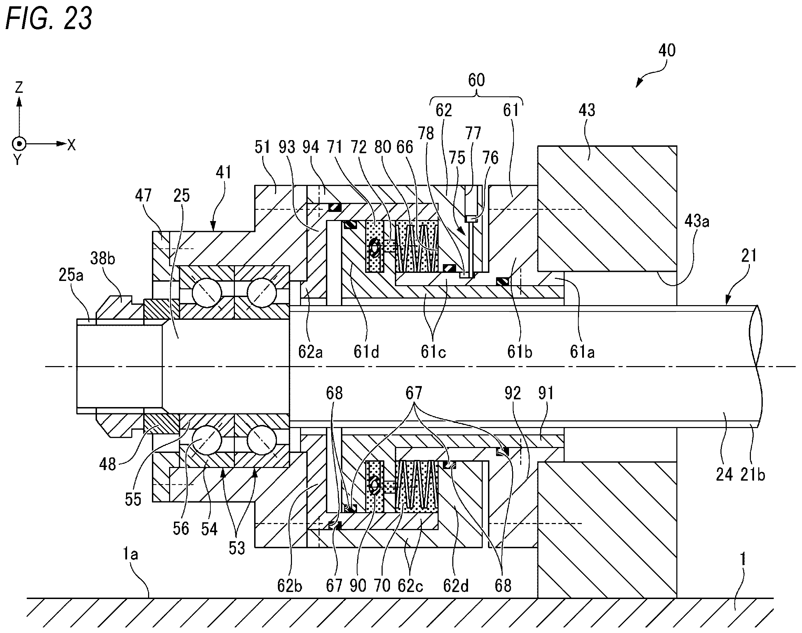

However, in the fifth embodiment, the housing position adjustment mechanism 60 as illustrated in FIG. 23 is used to maintain the support rigidity of the screw shaft 21 in the axial direction. Specifically, when the screw shaft 21 extends in the axial direction, the bearing unit 41 and the bearing housing side member 62 move to the left direction via the pair of angular ball bearings 53, 53 that move together with the screw shaft 21, and the volume of the pressure chamber 66 decreases. On the other hand, when the pressures of the hydraulic oil 70, the disc springs 80 and the hollow member 90 gradually increase, the bearing unit 41 and the bearing housing side member 62 are pressed to the right direction. Therefore, by adjusting the volume of the pressure chamber 66 and the pressures of the disc springs 80 and the hollow member 90 so as to allow the extension of the screw shaft 21 in the axial direction, the support rigidity of the screw shaft 21 in the axial direction can be maintained.

In this case, the support base side member 61 includes a small-diameter cylindrical portion 61c extending from a small-diameter portion of an annular base 61b attached to the support base 43 toward the bearing housing 51, and an outward flange portion 61d extending from a tip of the small-diameter cylindrical portion 61c toward an outer diameter side. The bearing housing side member 62 includes a large-diameter cylindrical portion 62c extending from a large-diameter portion of an annular base 62b attached to the movable side bearing housing 51 toward the support base 43, and an inward flange portion 62d extending from a tip of the large-diameter cylindrical portion 62c toward an inner diameter side.

The outward flange portion 61d of the support base side member 61 is relatively movable in the axial direction between the annular base 62b and the inward flange portion 62d of the bearing housing side member 62, and an outer peripheral surface thereof is in sliding contact with an inner peripheral surface of the large-diameter cylindrical portion 62c via the O-ring 67. The inward flange portion 62d of the bearing housing side member 62 is relatively movable in the axial direction between the annular base portion 61b and the outward flange portion 61d of the support base side member 61, and an inner peripheral surface thereof is in sliding contact with an outer peripheral surface of the small-diameter cylindrical portion 61c via the O-ring 67. Therefore, the pressure chamber 66 is formed by an annular space partitioned by the small-diameter cylindrical portion 61c and the outward flange portion 61d of the support base side member 61 and the large-diameter cylindrical portion 62c and the inward flange portion 62d of the bearing housing side member 62, and the pressure chamber 66 is filled with the hydraulic oil 70 and the disc springs 80 in a slightly compressed state.

Further, the outward flange portion 61d is formed with the storage chamber 71 that opens to the inner peripheral surface of the large-diameter cylindrical portion 62c, and the orifice 72 that allows the pressure chamber 66 to communicate with the storage chamber 71. The hollow member 90 is disposed in the storage chamber 71.

In this case, when the screw shaft 21 extends in the axial direction due to thermal expansion, the pair of angular ball bearings 53, 53, the bearing housing 51, and the bearing housing side member 62 compress the hydraulic oil 70 and the disc springs 80 in the pressure chamber 66 and the hydraulic oil 70 and the hollow member 90 in the storage chamber 71, while moving to the left direction in the drawing by an interaction of these pressures, so that the support rigidity of the screw shaft 21 in the axial direction can be maintained.

Especially, since the hydraulic oil 70 can flow through the pressure chamber 66 and the storage chamber 71 via the orifice, the plurality of disc springs 80, the hollow member 90, and the hydraulic oil 70 can share the load pressing against the bearing unit 41 and the bearing housing side member 62, and can be designed to change in response to the extension in the axial direction of the screw shaft 21 even when the temperature rises by more than 4 degrees. As a result, while the screw shaft 21 extends in the axial direction, the pair of angular ball bearings 33, 33 are maintained as fixed supports, and the rigidity in the axial direction of the ball screw feeding device 20 is stabilized.

Further, since the O-ring 67 is mounted between the inner peripheral surface of the inward flange portion 62d and the outer peripheral surface of the small-diameter cylindrical portion 61c and between the outer peripheral surface of the outward flange portion 61d and the inner peripheral surface of the large-diameter cylindrical portion 62c, the leakage of the hydraulic oil 70 with which the pressure chamber 66 and the storage chamber 71 are filled can be prevented, and the O-ring 67 can also act as a damping mechanism to damp the vibration generated in the screw shaft 21.

In addition, the hydraulic oil 70 in the pressure chamber 66 and the storage chamber 71 passes through the orifice 72 and the gap between the inner peripheral surface of the large-diameter cylindrical portion 62c and the outer peripheral surface of the outward flange portion 61d, thereby damping the vibration of the screw shaft 21.

Further, the hydraulic oil 70 in a compressed state is stored in the gaps between the inner peripheral surface of the inward flange portion 62d and the outer peripheral surface of the small-diameter cylindrical portion 61c, and between the outer peripheral surface of the outward flange portion 61d and the inner peripheral surface of the large-diameter cylindrical portion 62c. Therefore, the support rigidity and aligning performance in the radial direction between the bearing housing side member 62 and the support base side member 61 can be improved by the pressure to the radial direction of the hydraulic oil 70 acting on the gaps. As a result, the housing position adjustment mechanism 60 can provide the support rigidity in a radial direction to the screw shaft 21, and can also have an alignment function with respect to the screw shaft 21.

Note that the support base side member 61 and the bearing housing side member 62 may be constituted by single members, but as illustrated in FIG. 23, the support base side member 61 and the bearing housing side member 62 may be constituted in a state in which the O-rings 67 are sandwiched between two members 91, 92 and 93, 94 in consideration of an assembly ability.

Although the O-rings 67 and the seal grooves 68 are provided between opposite surfaces, respectively, a plurality of O-rings and a plurality of seal grooves may be provided.

Instead of FIG. 23, the support base side member 61 may include a large-diameter cylindrical portion and an inward flange portion, and the bearing housing side member 62 may include a small-diameter cylindrical portion and an outward flange portion to form a pressure chamber.

Further, the storage chamber and the orifice may be formed in the inward flange portion 62d, and the storage chamber may be opened to the outer peripheral surface of the small-diameter cylindrical portion 61c.

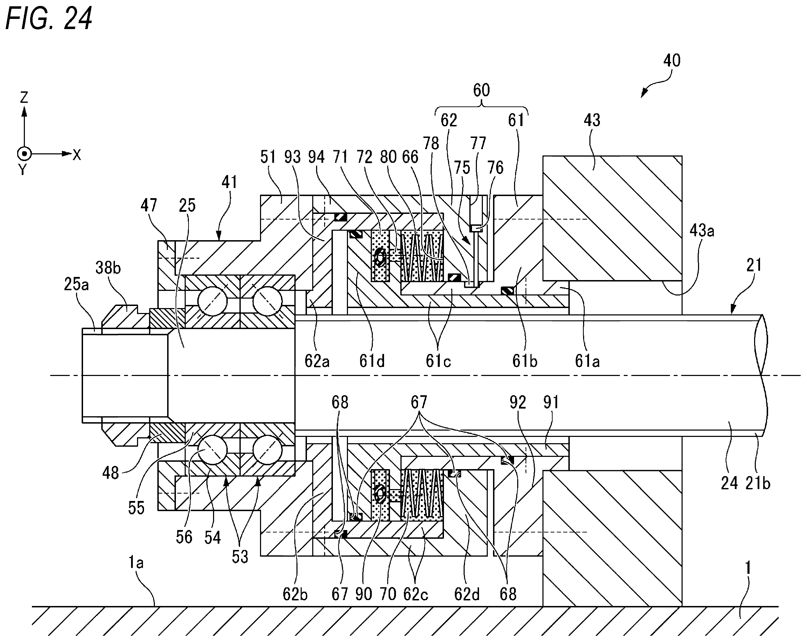

Also in such a housing position adjustment mechanism 60, the pair of angular ball bearings 53, 53 may be arranged in front surface combination as illustrated in FIG. 23, may be arranged in back surface combination as illustrated in FIG. 24, or may be arranged in various support forms such as parallel combination. In addition, although not illustrated, the pair of angular ball bearings is not necessarily constituted by two angular ball bearings, and may be constituted by three or more ball bearings.

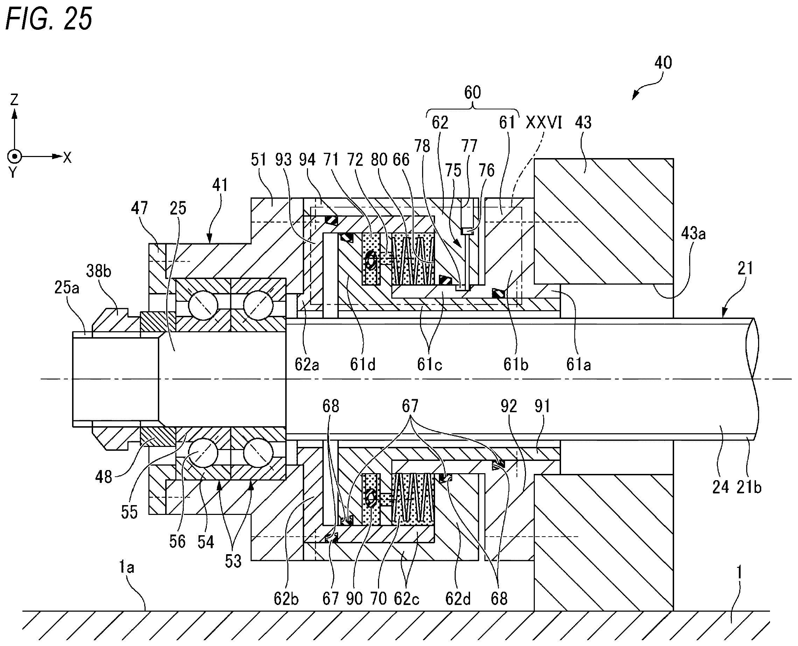

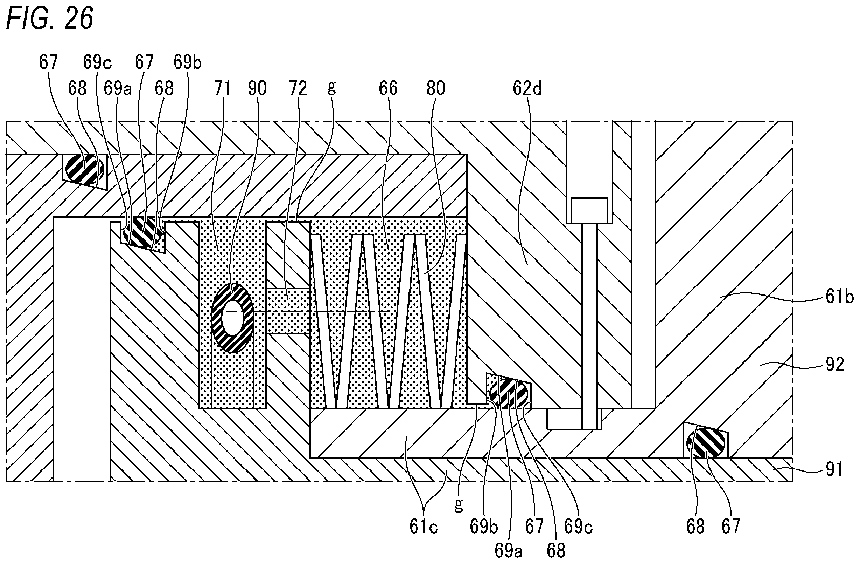

Further, as illustrated in FIGS. 25 and 26, in the housing position adjustment mechanism 60 of the fifth embodiment, similarly to the second embodiment, the seal groove 68 formed on the inner peripheral surface of the inward flange portion 62d and the outer peripheral surface of the outward flange portion 61d may be constituted by the tapered surface 69a whose groove depth decreases as a distance from the pressure chamber side increases, and both side surfaces 69b, 69c in the axial direction having a circular ring shape extending along the radial direction from both end edges in the axial direction of the tapered surface 69a.

Therefore, as the pressure of the hydraulic oil 70 in the pressure chamber 66 increases and the O-ring 67 is pushed toward the atmospheric pressure side, the sealing property of the O-ring 67 is further improved by a wedge structure between the tapered surface 69a of the seal groove 68 and the opposite outer peripheral surface of the small-diameter cylindrical portion 61c or the inner peripheral surface of the large-diameter cylindrical portion 62c. As a result, even when relative movement between the support base side member 61 and the bearing housing side member 62 occurs, leakage of the hydraulic oil 70 to the atmospheric pressure side can be prevented, and the axial rigidity of the ball screw feeding device 20 can be continuously maintained.

Note that in the present modification, as illustrated in FIG. 26, the seal groove 68 formed in any one of opposite surfaces of the two members 91, 92 constituting the support base side member 61 and the seal groove 68 formed in any one of opposite surfaces of the two members 93, 94 constituting the bearing housing side member 62 may also have the tapered surface 69a whose groove depth decreases as the distance from the pressure chamber side increases.

Also in the case of the present modification, a wear-resistant member may be interposed between the O-ring 67 and at least one of the inner peripheral surface of the inward flange portion 62d and the outer peripheral surface of the small-diameter cylindrical portion 61c, and between the O-ring 67 and at least one of the outer peripheral surface of the outward flange portion 61d and the inner peripheral surface of the large-diameter cylindrical portion 62c.

Also in this case, the wear-resistant member 59 may be interposed between the O-ring 67 and the surface opposite to the O-ring 67 in the seal groove 68 having the tapered surface 69a as illustrated in FIG. 26, or may be interposed between the O-ring 67 and the surface opposite to the O-ring 67 in the seal groove 68 having a uniform groove depth as illustrated in FIG. 23.

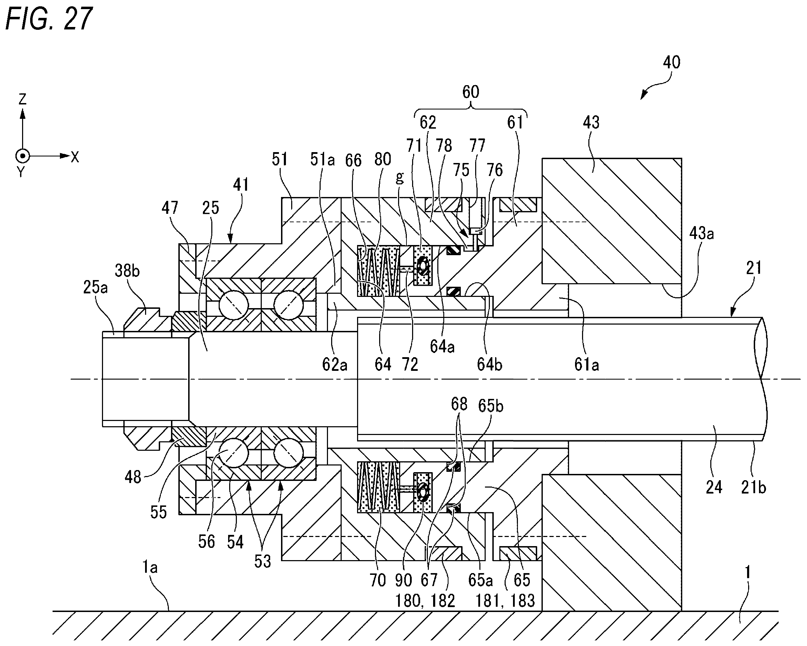

Further, as illustrated in FIG. 27, in the housing position adjustment mechanism 60 of the fifth embodiment, similarly to the third embodiment, the support base side member 61 and the bearing housing side member 62 may be provided with a working medium volume change unit such as the heating elements 180, 181 or the cooling media 182, 183.

Accordingly, as described in the third embodiment, depending on the state of the ball screw feeding device 20 being used, the volumes of the hollow member 90 and the hydraulic oil 70 in the pressure chamber 66 is expanded by the heating element 180, 181, and the volumes of the hollow member 90 and the hydraulic oil 70 in the pressure chamber 66 is contracted by the cooling media 182, 183, so that the support rigidity in the axial direction can be continuously maintained in a stable state.

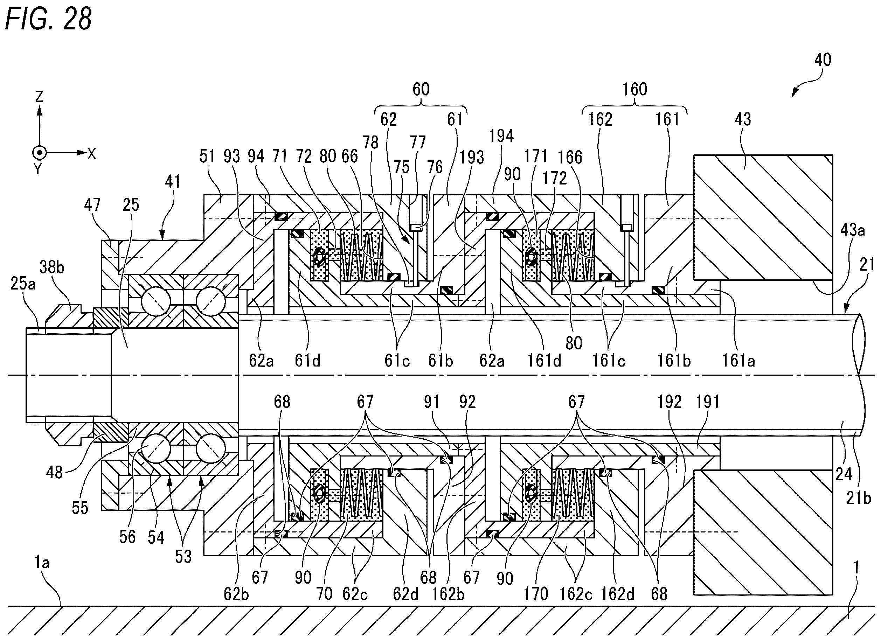

In the housing position adjustment mechanism 60 of the fifth embodiment, as illustrated in FIG. 28, similarly to the fourth embodiment, the second support mechanism 40 may have a tandem configuration in which the housing position adjustment mechanism 60 and the another housing position adjustment mechanism 160 are arranged in series in the axial direction between the bearing unit 41 and the support base 43.

Also in this case, the another support base side member 161 of the another housing position adjustment mechanism 160 includes an annular base 161b, a small-diameter cylindrical portion 161c, and an outward flange portion 161d, and the another bearing housing side member 162 includes an annular base 162b, a large-diameter cylindrical portion 162c, and an inward flange portion 162d. Each of the another support base side member 161 and the another bearing housing side member 162 of the another housing position adjustment mechanism 160 is constituted by two members 191, 192 and 193, 194, respectively. The support base side member 61 of the housing position adjustment mechanism 60 and the another bearing housing side member 162 of the another housing position adjustment mechanism 160 are connected to each other and integrally formed.

As in the fourth embodiment, the second support mechanism 40 may have a configuration in which a plurality of housing position adjustment mechanisms are arranged in series in the axial direction, or may have a configuration in which the housing position adjustment mechanisms are arranged in parallel in the radial direction.

The present invention is not limited to the above embodiments, and can be appropriately modified, improved, or the like. Each embodiment and each modification described in the present specification can be combined and applied within a practicable range.

For example, an auxiliary accumulator or an external pump for supplying a hydraulic oil can be connected to the above-described pressure chamber or storage chamber as necessary. Further, the pressure chamber and the storage chamber may diagnose or correct the state of the ball screw feeding device by monitoring the pressure of the hydraulic oil and the load applied to the pair of angular bearings 53, 53.

In the above embodiment, a disc spring is used as the elastic member, but the elastic member is not limited thereto and may be a coil spring.

In the first to fourth embodiments, the O-rings 67 are mounted between the outward surface 65a of the annular convex portion 65 and the inward surface 64a of the annular concave portion 64 and between the inward surface 65b of the annular convex portion 65 and the outward surface 64b of the annular concave portion 64, but the present invention is not limited thereto, and a seal member for preventing the hydraulic oil 70 from leaking from the pressure chamber 66 may be disposed.

Similarly, in the fifth embodiment, the O-rings 67 are mounted between the outer peripheral surface of the outward flange portion 61d and the inner peripheral surface of the large-diameter cylindrical portion 62c and between the inner peripheral surface of the inward flange portion 62d and the outer peripheral surface of the small-diameter cylindrical portion 61c, but the present invention is not limited thereto, and a seal member for preventing the hydraulic oil 70 from leaking from the pressure chamber 66 may be disposed.

Further, it is more preferable that the seal member not only prevents the hydraulic oil 70 from leaking from the pressure chamber 66, but also damps the vibration of the screw shaft 21 in the same manner as the O-ring 67.

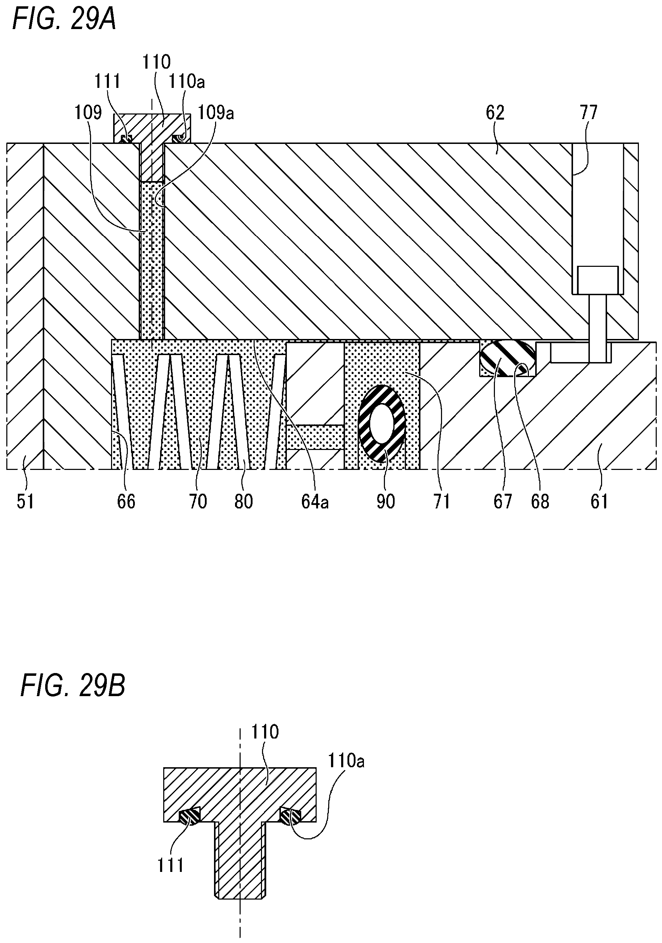

In any of the embodiments, the pressure chamber 66 is filled with the hydraulic oil 70 and needs to be sealed from the outside. In this case, for example, in the housing position adjustment mechanism 60 illustrated in FIG. 2, as illustrated in FIG. 29A, an oil supply path 109 for filling the pressure chamber 66 with the hydraulic oil 70 may be formed in the bearing housing side member 62 so as to penetrate in the radial direction between the inward surface 64a of the annular concave portion 64 and the outer peripheral surface of the bearing housing side member 62.

A stopper bolt 110 to be screwed into a female screw 109a formed in the oil supply path 109 to close the oil supply path 109 may be attached to the outer peripheral surface of the bearing housing side member 62. By filling a gap between the male screw and the female screw 109a by winding a sealing tape (not illustrated) around the male screw part of the stopper bolt 110 or by applying or fill the gap with a leakage preventing agent, it is possible to more reliably prevent leakage of the hydraulic oil 70 in a compressed state.

An annular seal groove 110a may be formed in a surface opposite to a head of the stopper bolt 110 that is opposite to the outer peripheral surface of the bearing housing side member 62. Accordingly, the O-ring 111 is attached to the seal groove 110a, and a sealing property of the stopper bolt 110 can be improved.

Note that as illustrated in FIG. 29B, a bottom surface of the seal groove 110a of the stopper bolt 110 may be formed in a tapered shape so as to further improve the sealing property.

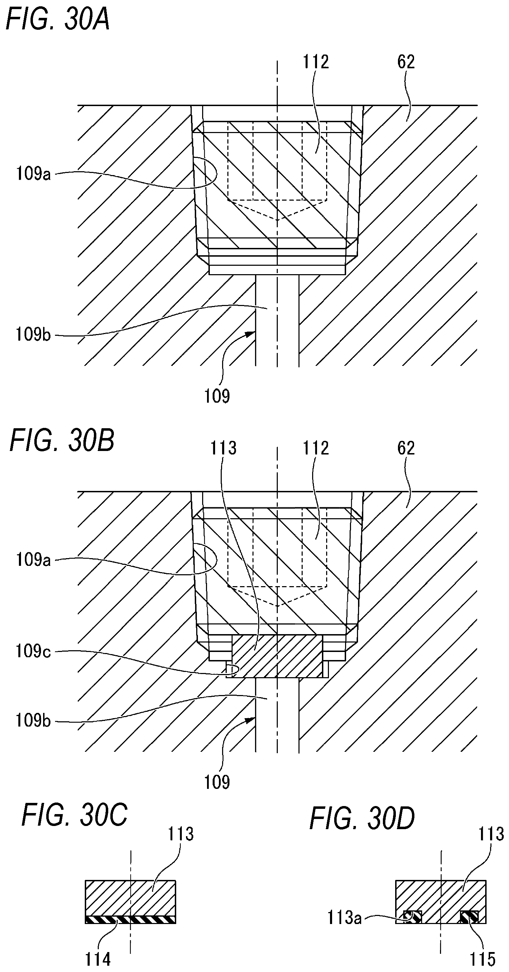

As a member for closing the oil supply path 109, a stopper plug may be used instead of the stopper bolt 110, and for example, the oil supply path 109 may be closed by a tapered stopper plug 112 as illustrated in FIG. 30A. In this case, the stopper plug 112 is screwed into the female screw 109a formed on the outer diameter side of the oil supply path 109 and fixed to the oil supply path 109. As illustrated in FIG. 30B, the oil supply path 109 includes a tapered female screw 109a on the outer diameter side, and a straight portion 109b not including the female screw is continuous with the female screw 109a via a stepped hole 109c. In this case, the stopper plug 112 may be fastened to the female screw 109a in a state in which a disc-shaped member 113 is accommodated in the stepped hole 109c. In this case, since the stopper plug 112 is fastened to the female screw 109a while deforming the disc-shaped member 113, a sealing property is ensured between the disc-shaped member 113 and a contact surface of the stepped hole 109c.

By filling a gap between the male screw and the female screw 109a by winding a sealing tape (not illustrated) around the male screw part of the stopper plug 112 or by applying or fill the gap with a leakage preventing agent, a good sealing property may also be provided.

Note that as illustrated in FIG. 30C, the disc-shaped member 113 may be integrated with an elastic deformable member 114 constituting a contact surface with the stepped hole 109c. Alternatively, as illustrated in FIG. 30D, an annular seal groove 113a may be formed in a contact surface of the disc-shaped member 113 with the stepped hole 109c, and an O-ring 115 may be disposed.

The oil supply path 109 communicating with the pressure chamber 66 is not limited to the configuration in which the oil supply path 109 is formed to penetrate in the radial direction, and may be formed to penetrate any member constituting the pressure chamber 66 in the axial direction.

Further, the support base may be configured to directly or indirectly support the support base side member of the housing position adjustment mechanism, and is not limited to the configuration in which the rotation shaft penetrates the support base as in the above embodiments, and may be configured to be disposed around the rotation shaft, and can be designed to have any shape.

### (Application to Other Ball Screw Feeding Devices)

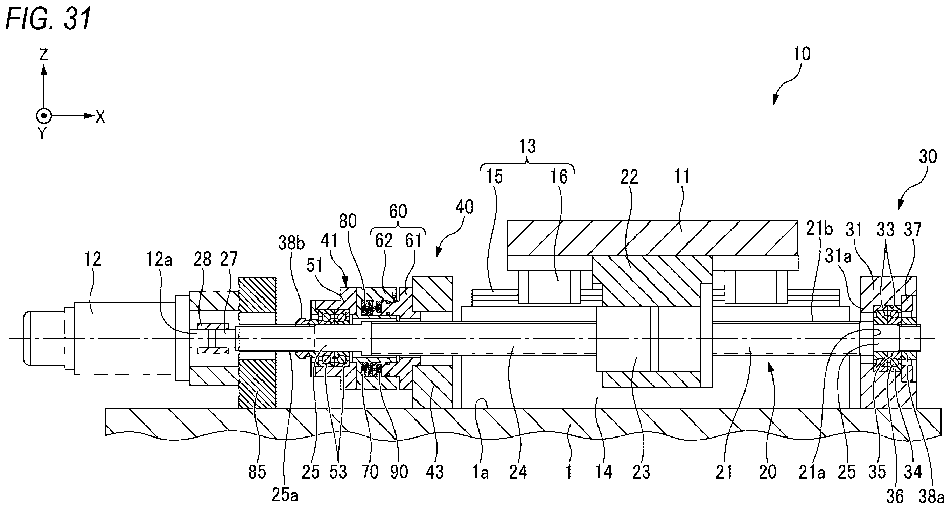

In the ball screw feeding device 20 of FIG. 1, the drive motor 12 is connected to one side (right side in FIG. 1) of the screw shaft 21 supported by the first support mechanism 30, but the present invention is not limited thereto. That is, as in the ball screw feeding device 20 of FIG. 31, the drive motor 12 may be connected to the other side (left side in FIG. 31) of the screw shaft 21 supported by the second support mechanism 40.

In this case, the drive motor 12 is fixed to the base 1 and is supported by another support base 85 through which the screw shaft 21 penetrates. A tip of the small-diameter shaft 27 is disposed in the coupling 28 away from the rotation shaft 12a of the drive motor 12 so that the small-diameter shaft 27 can move in the axial direction when the screw shaft 21 extends in the axial direction due to thermal expansion.

Therefore, the present invention can be used with a high degree of freedom as a ball screw feeding device used for positioning of a device that performs high-precision machining and measurement, semiconductor manufacturing, and the like, such as a machine tool (machining center, lathe, grinder, and the like), a measuring machine (three-dimensional measuring device), a semiconductor manufacturing device (exposure device, table of inspection probe and the like), and the like.

Although the support base 43 is disposed on the axial center side with respect to the bearing unit 41 in the above embodiments, the present invention is not limited thereto, and the support base 43 may be disposed on an axial end side of the bearing unit 41. That is, the support base 43 may be disposed on the axial center side or may be disposed on the axial end side with respect to the bearing unit 41 according to the configuration and function of the housing position adjustment mechanism 60.

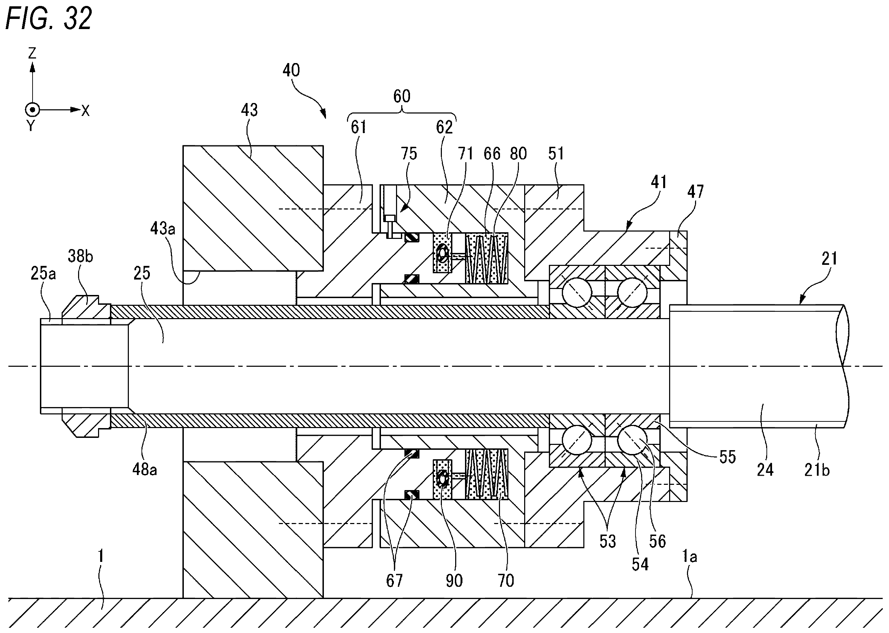

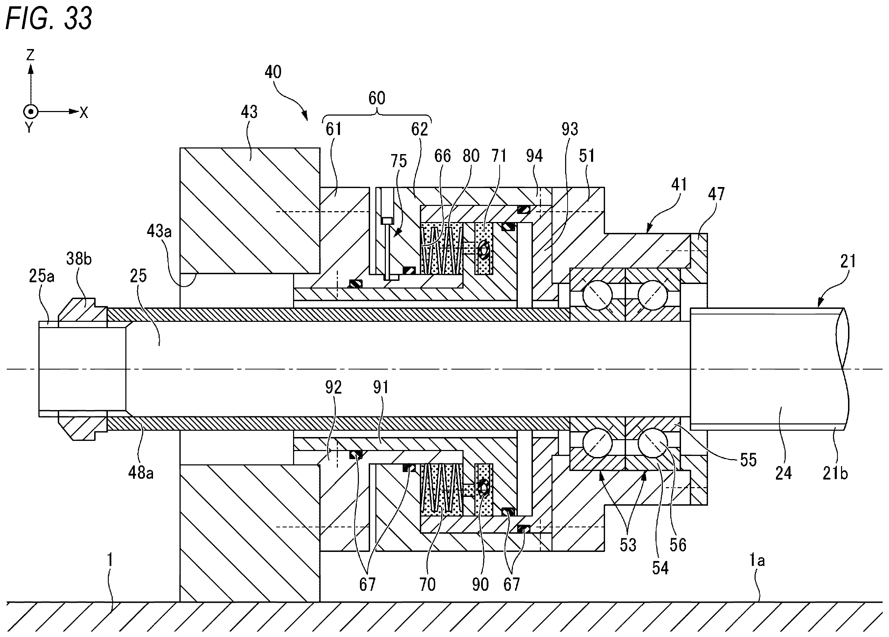

For example, in the embodiment illustrated in FIGS. 32 and 33, the support base 43 is provided on the axial end side with respect to the bearing unit 41. In this case, the support base side member 61 may be directly or indirectly attached to the support base 43, and the bearing housing side member 62 may be directly or indirectly attached to the bearing housing 51. A spacer 48a disposed between the inner ring 55 and the fastening nut 38b passes through the through hole 43a of the support base 43, and the inside of the support base side member 61 and the bearing housing side member 62.

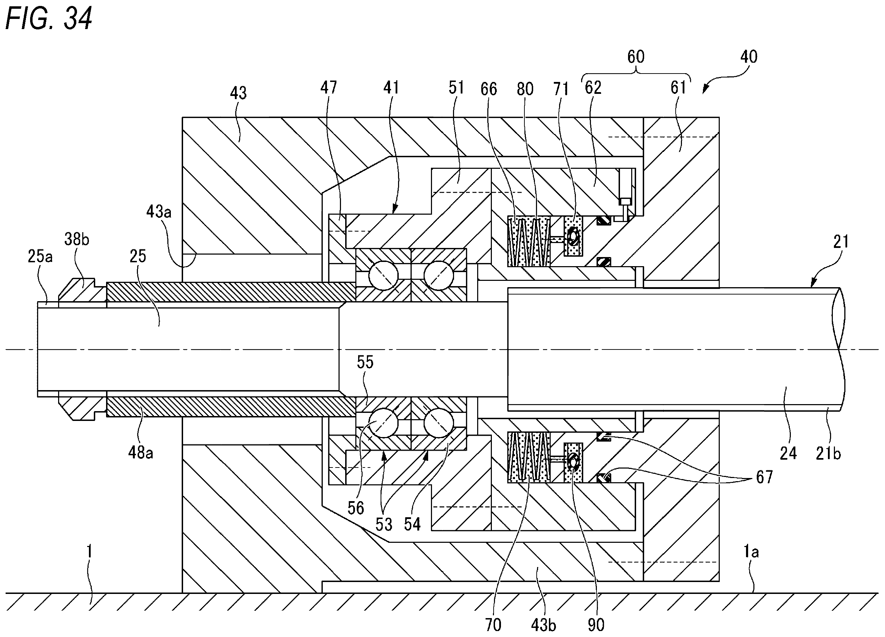

In the embodiments as illustrated in FIGS. 34 and 31, the support base 43 is disposed on the axial end side with respect to the bearing unit 41, and is fixed to the support base side member 61 disposed on the axial center side with respect to the bearing unit 41 by an outer cylindrical portion 43b extending in the axial direction from a main body part including the through hole 43a and surrounding a periphery of the housing position adjustment mechanism 60. Also in this case, the support base side member 61 may be directly or indirectly attached to the support base 43, and the bearing housing side member 62 may be directly or indirectly attached to the bearing housing 51. The spacer 48a disposed between the inner ring 55 and the fastening nut 38b passes through the through hole 43a of the support base 43.

### (Application to Devices Other than Ball Screw Feeding Device)

In the above-described embodiments, the ball screw feeding devices have been described, but the present invention is applicable to a rotation support device in which both ends in an axial direction of a rotation shaft are supported by a pair of support mechanisms in a rotatable manner, in addition to the ball screw feeding devices. That is, when an axial length of the rotation shaft changes due to an influence of heat, a housing position adjustment mechanism as in the above embodiments can be used to continuously and stably maintain the support rigidity of the rotation shaft in the axial direction.

By using the housing position adjustment mechanism in the above embodiments, vibration in the axial direction and the radial direction can be damped.

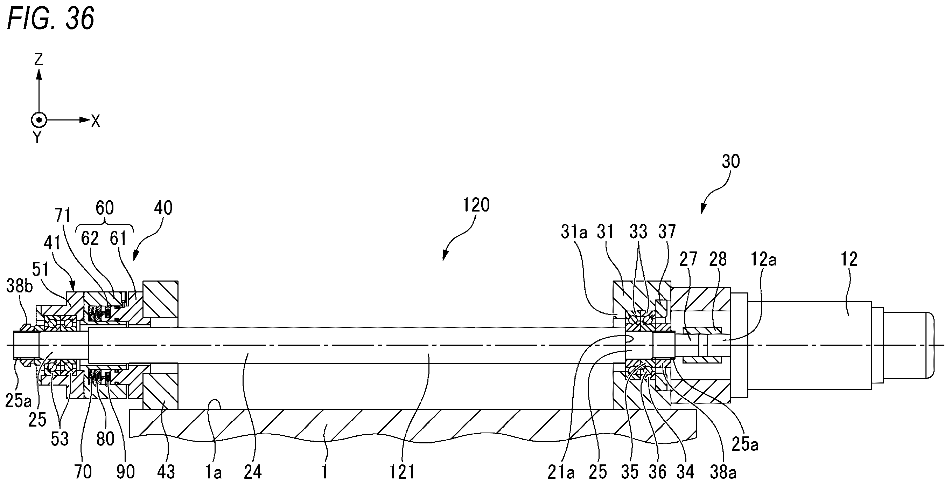

For example, as illustrated in FIG. 36, a rotation support device 120 includes a rotation shaft 121 and a pair of support mechanisms 30, 40 that support both ends in an axial direction of the rotation shaft 121 in a rotatable manner.

The support mechanism 30 includes a bearing housing 31 fixed to a base 1, and bearings 33, 33 that support the rotation shaft 121 in a rotatable manner with respect to the bearing housing 31, that is, a pair of angular ball bearings 33, 33 arranged in front surface combination.

The support mechanism 40 includes a bearing unit 41 including a bearing housing 51 and a pair of bearings 53, 53 that support the rotation shaft 121 in a rotatable manner with respect to the bearing housing 51 and can support an axial load, that is, a pair of angular ball bearings 53, 53 arranged in front surface combination, a support base 43 that is disposed on an axial center side with respect to the bearing unit 41 and through which the rotation shaft 121 penetrates, and a housing position adjustment mechanism 60 disposed between the bearing unit 41 and the support base 43.

The housing position adjustment mechanism 60 includes the support base side member 61 provided on the support base 43 side and through which the rotation shaft 121 penetrates, the bearing housing side member 62 provided on the bearing housing 51 side, through which the rotation shaft 121 penetrates, and movable in the axial direction relative to the support base side member 61, the hydraulic oil (working fluid ) 70 accommodated in the pressure chamber 66 formed between the support base side member 61 and the bearing housing side member 62, the storage chamber 71 formed in either one of the support base side member 61 and the bearing housing side member 62, and the orifice 72 allowing the pressure chamber 66 to communicate with the storage chamber 71, a disc spring (elastic member) 80 disposed in a compressed state between opposite end surfaces in the axial direction of the support base side member 61 and the bearing housing side member 62 in the pressure chamber 66, and the hollow member 90 accommodated in the storage chamber 71.

Note that in FIG. 36, the same reference numerals as those in the above embodiments denote the same parts, and description thereof will be omitted or simplified. In addition, the various structures described in the ball screw feeding device 20 can also be applied to the rotation support device, and achieve the same effects.

Each of the bearings 33, 53 of the support mechanisms 30, 40 of the rotation support device 120 may be an angular ball bearing as in the above embodiments, but is not limited thereto, and may be a roller bearing or a slide bearing capable of supporting an axial load. By using a bearing capable of supporting such an axial load, especially in the support mechanism 40, the hydraulic oil 70 and the elastic member 80 can be compressed via the bearing by fastening the fastening nut 38b as in the above embodiments.

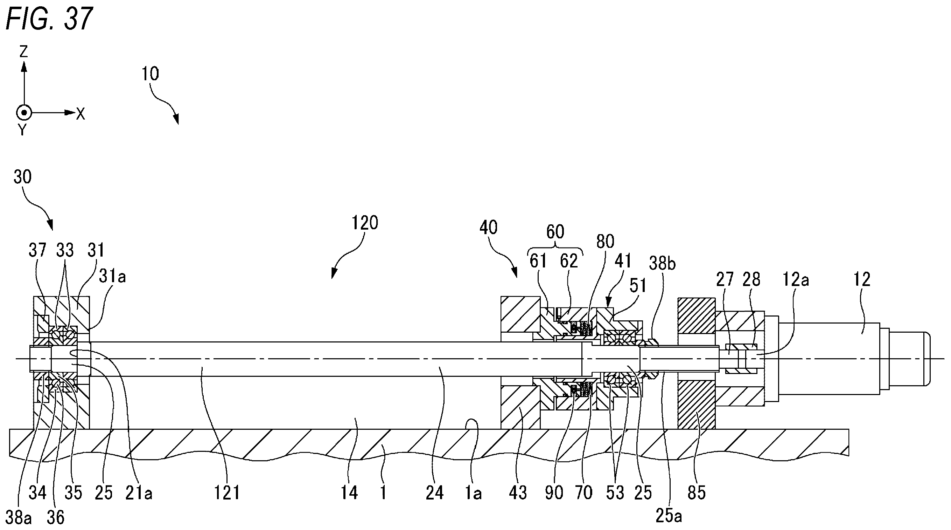

In FIG. 36, the second support mechanism 40 including the housing position adjustment mechanism 60 is configured to support an end of the rotation shaft 121, but as illustrated in FIG. 37, the second support mechanism 40 including the housing position adjustment mechanism 60 may be configured to support the rotation shaft 121 at a position close to another support base 85 that supports the drive motor 12.

For example, when the rotation support device 120 as illustrated in FIG. 37 is applied to a spindle device that rotates a tool in a machine tool, by attaching the tool to the end of the rotation shaft 121 supported by the support mechanism 30, positioning in the axial direction of the tool is reliably performed while continuously and stably maintaining the support rigidity in the axial direction of the rotation shaft 121, and highly accurate machining can be achieved.

Note that in the rotation support device 120 as illustrated in FIGS. 36 and 37, the drive motor 12 is not necessarily disposed coaxially with the rotation shaft 121, and for example, power of a drive motor may be transmitted to the rotation shaft 121 via a pulley, a gear train, or the like.

In addition, the drive motor 12 is not necessarily limited to a separate body disposed coaxially with the rotation shaft 121, and for example, a built-in motor may be directly included in the rotation shaft 121.

The rotation support device 120 may be a housing case as a support in which the bearing housing 31 of the first support mechanism 30 and the support base 43 of the second support mechanism 40 are integrated.

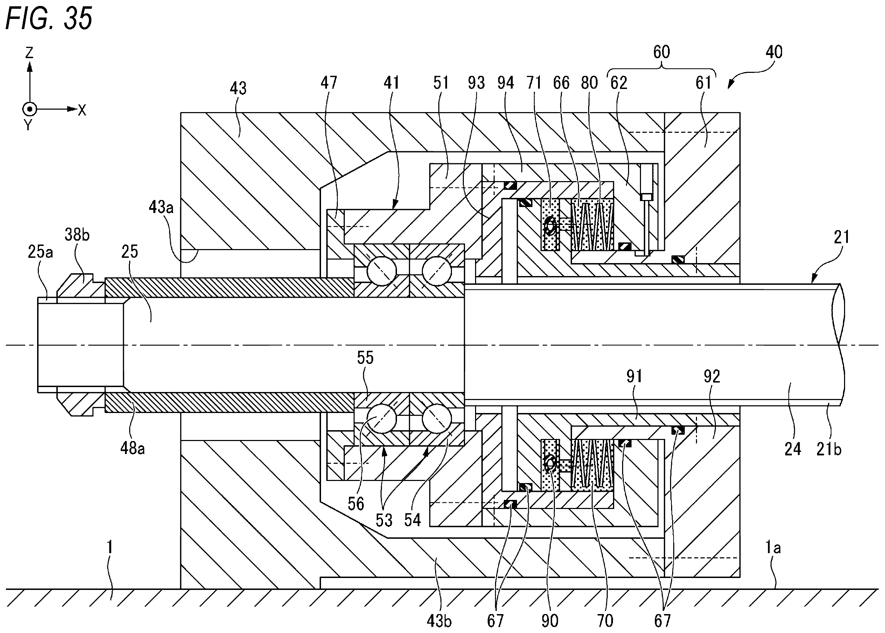

Note that also in a rotation support device other than the ball screw feeding device, as illustrated in FIGS. 32 to 35, the support base may be disposed on an axial end side with respect to the bearing unit.

In the above embodiments, the housing position adjustment mechanism is described as a mechanism that adjusts the position in the axial direction of the bearing housing of the bearing that supports the rotation shaft, but the present invention is not limited thereto, and can be applied as a support mechanism position adjustment mechanism for a shaft support device. That is, the shaft is not limited to a rotation shaft, and the support mechanism is not limited to a configuration including a bearing, and the shaft support device may have a configuration including a shaft and a pair of support mechanisms provided at both ends in an axial direction of the shaft for supporting the shaft, and in which one of the pair of support mechanisms may include a support (for example, the support base 43 in the above embodiments) through which the shaft penetrates or which is disposed around the shaft.

Therefore, the support mechanism position adjustment mechanism for a shaft support device may be configured to include a first member (for example, the support base side member 61 in the above embodiments) which is provided on one of the shaft side and the support side, through which the shaft penetrates or which can be disposed around the shaft, a second member (for example, the bearing housing side member 62 in the above embodiments) which is provided on the other of the shaft side and the support side, through which the shaft penetrates, or which can be disposed around the shaft, which is movable in the axial direction relative to the first member, a working fluid with which a pressure chamber formed between the first member and the second member, a storage chamber formed in either one of the first member and the second member, and an orifice allowing the pressure chamber to communicate with the storage chamber are filled, an elastic member disposed in a compressed state between opposite end surfaces in the axial direction of the first member and the second member in the pressure chamber, and a hollow member accommodated in the storage chamber.

The structure of the housing position adjustment mechanism described in the ball screw feeding device 20 can be applied to such a support mechanism position adjustment mechanism for a shaft support device, and the same effects are obtained.

For example, FIGS. 42 and 43 illustrate a rigid joint structure 200 as a shaft support device in which a support mechanism position adjustment mechanism is provided in one of a pair of support mechanisms that support a shaft. The rigid joint structure 200 includes two steel supports 231, 243 that are parallel to each other and fixed to a base 1 while standing vertically. The supports 231, 243 are formed with concentric through holes 231a, 243a, and a shaft 221 constituting a beam member is inserted therethrough. Note that the supports 231, 243 may be a support, a beam, a support plate, or the like, and may be made of a member of any material and shape capable of supporting the shaft.

Note that in this example, in the shaft 221, a flange 226 on one end side in the axial direction is brought into contact with a small-diameter step portion 231b of the through hole 231a of the support 231, and one end of the shaft 221 is positioned and fixed to the support 231 by the other support mechanism for attaching a pressing lid 232 to a large-diameter step portion 231c of the through hole 231a.

The other end of the shaft 221 in the axial direction is inserted through the through hole 243a of the support 243, protrudes to a side opposite to the support 231, and is supported by the support 243 via a shaft guide member 250, a housing 251, and a support mechanism position adjustment mechanism 260 constituting one support mechanism.

A cross-sectional shape of a central portion of the shaft 221 is freely set, and may be a rectangular steel pipe, H-shaped steel, or the like.

The shaft guide member 250 is a member configured to surround the shaft 221, guides the small-diameter portion 225 of the shaft 221, and both ends on the outer diameter side thereof are sandwiched and integrated by a pressing member 247 fixed to the housing 251 and the housing 251.

Similarly to the above embodiments, the housing 251 is attached to the support 243 via the support mechanism position adjustment mechanism 260. That is, the first member 261 corresponding to the support base side member 61 of the above embodiments is fitted to the through hole 243a of the support 243 and fixed to the support 243, and the second member 262 corresponding to the bearing housing side member 62 of the above embodiments is fitted to an inward flange 251a of the housing 251 and fixed to the housing 251.

Therefore, when the shaft guide member 250 is fastened by a fastening nut 38b screwed to a male screw 225a via a spacer 48, a reaction force acts on the shaft guide member 250 to receive an axial load. Therefore, predetermined rigidity is given between the supports 231, 243 and the shaft 221.

In such a rigid joint structure 200, even when the shaft 221 extends in the axial direction, the support mechanism position adjustment mechanism 260 operates to move the shaft guide member 250 and the housing 251 in the same direction following the extension of the shaft 221 in the axial direction. Therefore, a shaft force acting on the shaft 221 can be maintained, and rigidity of the rigid joint structure 200 can be maintained.

Note that in this example, the housing 251 and the second member 262 of the support mechanism position adjustment mechanism 260 may be integrally formed, and the shaft guide member 250 may be disposed on the integrated member. Further, the shaft guide member 250 may be directly fixed to the second member 262 of the support mechanism position adjustment mechanism 260 without providing the housing 251.

The shaft support device is not limited to the rigid joint structure as in the present example, and may be a brace structure in which support mechanisms on a shaft side and a support side are joined via pins. In this case, the shaft 221 may be disposed to be inclined according to the configuration of the brace structure.

Further, in the shaft support device such as the rigid structure, both support mechanisms may have a support mechanism position adjustment mechanism.

As described above, the following matters are disclosed in the present specification.

(A1) A ball screw feeding device, including:
a screw shaft including an outer peripheral surface formed with a spiral screw groove;
a nut including an inner peripheral surface formed with a spiral screw groove;
a plurality of balls arranged between the screw groove of the screw shaft and the screw groove of the nut in a freely rolling manner; and
a pair of support mechanisms that support both ends in an axial direction of the screw shaft in a rotatable manner, in which
one of the pair of support mechanisms includes
   a bearing unit including a bearing housing and an angular ball bearing including an outer ring fitted into the bearing housing, an inner ring fitted onto an axial end of the screw shaft, and a ball disposed between the outer ring and the inner ring in a freely rolling manner,
   a support base disposed on an axial center side of the bearing unit and through which the screw shaft penetrates, and
   a housing position adjustment mechanism disposed between the bearing unit and the support base, and
the housing position adjustment mechanism includes
   a support base side member provided on the support base side and through which the screw shaft penetrates,
   a bearing housing side member provided on the bearing housing side, through which the screw shaft penetrates, and movable relative to the support base side member in the axial direction,
   a working fluid accommodated in a pressure chamber formed between the support base side member and the bearing housing side member, a storage chamber formed in either one of the support base side member and the bearing housing side member, and an orifice allowing the pressure chamber to communicate with the storage chamber,
   an elastic member disposed in a compressed state between opposite end surfaces in the axial direction of the support base side member and the bearing housing side member in the pressure chamber, and
   a hollow member accommodated in the storage chamber.

According to this configuration, even when an axial length of the screw shaft changes due to an influence of heat, support rigidity in the axial direction can be continuously and stably maintained, and vibration in the axial direction and a radial direction can be damped.

(A2) The ball screw feeding device according to (A1), in which
one of the support base side member and the bearing housing side member has an annular concave portion that opens to one side in the axial direction,
the other of the support base side member and the bearing housing side member has an annular convex portion that protrudes toward the other side in the axial direction and is fitted into the annular concave portion in a slidable manner in the axial direction,
the pressure chamber is formed between the annular concave portion and the annular convex portion,
the storage chamber is formed in the annular convex portion so as to open to an outward surface or an inward surface of the annular convex portion, and
the orifice is formed in the annular convex portion.

According to this configuration, since the pressure chamber is formed between the annular concave portion and the annular convex portion, the housing position adjustment mechanism can be configured compactly around the screw shaft. The working fluid passes through the orifice and a gap between the outward surface of the annular convex portion and an inward surface of the annular concave portion, so that the vibration can be damped.

(A3) The ball screw feeding device according to (A2), in which
at least one seal member is mounted between an inward surface of the annular concave portion and the outward surface of the annular convex portion, and between an outward surface of the annular concave portion and the inward surface of the annular convex portion.

According to this configuration, the seal member can prevent leakage of the working fluid with which the pressure chamber and the storage chamber are filled, and functions of the housing position adjustment mechanism can be maintained for a long period of time.

(A4) The ball screw feeding device according to (A2) or (A3), in which
the working fluid is stored in each gap between the inward surface of the annular concave portion and the outward surface of the annular convex portion, and between the outward surface of the annular concave portion and the inward surface of the annular convex portion.

According to this configuration, the housing position adjustment mechanism can provide support rigidity in the radial direction to the screw shaft, and can also have an alignment function with respect to the screw shaft.

(A5) The ball screw feeding device according to (A3), in which
the seal member is an O-ring,
a seal groove in which the O-ring is disposed is formed in each of the inward surface of the annular concave portion or the outward surface of the annular convex portion, and the outward surface of the annular concave portion or the inward surface of the annular convex portion, and
the seal groove includes a tapered surface whose groove depth decreases as a distance from the pressure chamber increases.

According to this configuration, by using the O-ring as the seal member, the O-ring also acts as a damping mechanism, and the vibration generated in the screw shaft can be damped. Even when relative movement between the support base side member and the bearing housing side member occurs, leakage of a hydraulic oil to an atmospheric pressure side can be prevented, and axial rigidity of the ball screw feeding device can be continuously maintained.

(A6) The ball screw feeding device according to (A3) or (A5), in which
the seal member is an O-ring, and
a wear-resistant member is interposed between the O-ring and at least one of the inward surface of the annular concave portion and the outward surface of the annular convex portion, and between the O-ring and at least one of the outward surface of the annular concave portion and the inward surface of the annular convex portion.

According to this configuration, by using the O-ring as the seal member, the O-ring also acts as a damping mechanism, and the vibration generated in the screw shaft can be damped. Stress concentration applied to the O-ring can be dispersed, and damage such as wear of the O-ring and a contact surface with the O-ring can be reduced.

(A7) The ball screw feeding device according to any one of (A1) to (A4), in which
the elastic member is a disc spring including a conical plate having a plurality of through holes or a plurality of slits penetrating the conical plate in the axial direction.

According to this configuration, the working fluid flows through the plurality of through holes or the plurality of slits, thereby achieving a damping effect.

(A8) The ball screw feeding device according to (A1), in which
the hollow member includes at least one rib protruding from an inner peripheral surface thereof.

According to this configuration, when the hollow member is compressed and deformed, the hollow member can be prevented from being excessively deformed.

(A9) The ball screw feeding device according to (A1), in which
a plurality of the hollow members are arranged in the storage chamber.

Even when the axial length of the screw shaft changes due to the influence of heat, the support rigidity in the axial direction can be continuously and stably maintained by a total pressure generated by the plurality of hollow members.

(A10) The ball screw feeding device according to (A1), in which
a surface of the hollow member is covered with an outer layer.

According to this configuration, rigidity of the hollow member can be changed and the hollow member can be protected from the liquid.

(A11) The ball screw feeding device according to (A1), in which
the hollow member is a structure having a hollow cross section that is integrally molded with no seam.

According to this configuration, localized stress concentration is unlikely to occur, and a deformable hollow member can be easily manufactured.

(A12) The ball screw feeding device according to (A1), in which
the hollow member is a joined body having a hollow cross section, which is formed by integrating two or more members via edges of the two or more members.

According to this configuration, a deformable hollow member can be easily manufactured.

(A13) The ball screw feeding device according to (A1), in which
the hollow member forms a hollow cross section by bending a member and joining edges of the member.

According to this configuration, a deformable hollow member can be easily manufactured.

(A14) The ball screw feeding device according to (A1), in which
one of the support base side member and the bearing housing side member includes a small-diameter cylindrical portion extending to one side in the axial direction and an outward flange portion extending from a tip of the small-diameter cylindrical portion toward an outer diameter side,
the other of the support base side member and the bearing housing side member includes a large-diameter cylindrical portion extending to the other side in the axial direction and including an inner peripheral surface in sliding contact with an outer peripheral surface of the outward flange portion, and an inward flange portion extending from a tip of the large-diameter cylindrical portion toward an inner diameter side and including an inner peripheral surface in sliding contact with an outer peripheral surface of the small-diameter cylindrical portion,
the pressure chamber is formed in an annular space partitioned by the small-diameter cylindrical portion, the outward flange portion, the large-diameter cylindrical portion, and the inward flange portion,
the storage chamber is formed in the outward flange portion or the inward flange portion so as to open to an inner peripheral surface of the large-diameter cylindrical portion or an outer peripheral surface of the small-diameter cylindrical portion, and
the orifice is formed in the outward flange portion or the inward flange portion in which the storage chamber is formed.

According to this configuration, even when the axial length of the screw shaft changes due to the influence of heat, the support rigidity in the axial direction can be continuously and stably maintained. The working fluid passes through the orifice and the gap between the inner peripheral surface of the large-diameter cylindrical portion and the outer peripheral surface of the outward flange portion or between the outer peripheral surface of the small-diameter cylindrical portion and the inner peripheral surface of the inward flange portion, so that the vibration can be damped.

(A15) The ball screw feeding device according to (A14), in which
at least one seal member is mounted between an inner peripheral surface of the inward flange portion and the outer peripheral surface of the small-diameter cylindrical portion, and between an outer peripheral surface of the outward flange portion and the inner peripheral surface of the large-diameter cylindrical portion.

According to this configuration, the seal member can prevent leakage of the working fluid accommodated in the pressure chamber and the storage chamber, and the functions of the housing position adjustment mechanism can be maintained for a long period of time.

(A16) The ball screw feeding device according to (A14) or (A15), in which
the working fluid is stored in each gap between the inner peripheral surface of the inward flange portion and the outer peripheral surface of the small-diameter cylindrical portion, and between the outer peripheral surface of the outward flange portion and the inner peripheral surface of the large-diameter cylindrical portion.

According to this configuration, the housing position adjustment mechanism can provide the support rigidity in the radial direction to the screw shaft, and can also have an alignment function with respect to the screw shaft.

(A17) The ball screw feeding device according to (A15), in which
the seal member is an O-ring,
a seal groove in which the O-ring is disposed is formed in each of the inner peripheral surface of the inward flange portion or the outer peripheral surface of the small-diameter cylindrical portion, and the outer peripheral surface of the outward flange portion or the inner peripheral surface of the large-diameter cylindrical portion, and
the seal groove includes a tapered surface whose groove depth decreases as a distance from the pressure chamber increases.

According to this configuration, by using the O-ring as the seal member, the O-ring also acts as a damping mechanism, and the vibration generated in the screw shaft can be damped. Even when relative movement between the support base side member and the bearing housing side member occurs, leakage of a hydraulic oil to an atmospheric pressure side can be prevented, and axial rigidity of the ball screw feeding device can be continuously maintained.

(A18) The ball screw feeding device according to (A15), in which
the seal member is an O-ring, and
a wear-resistant member is interposed between the O-ring and at least one of the inner peripheral surface of the inward flange portion and the outer peripheral surface of the small-diameter cylindrical portion, and between the O-ring and at least one of the outer peripheral surface of the outward flange portion and the inner peripheral surface of the large-diameter cylindrical portion.

According to this configuration, by using the O-ring as the seal member, the O-ring also acts as a damping mechanism, and the vibration generated in the screw shaft can be damped. Stress concentration applied to the O-ring can be dispersed, and damage such as wear of the O-ring and a contact surface with the O-ring can be reduced.

(A19) The ball screw feeding device according to (A1), in which
a working medium volume change unit is attached to at least one of the support base side member and the bearing housing side member, and changes volumes of the hollow member and the working fluid by heating or cooling the hollow member and the working fluid.

According to this configuration, the hollow member and the working fluid can be heated or cooled to expand or contract the volumes of the hollow member and the working fluid, so that the support rigidity in the axial direction can be continuously maintained in a stable state.

(A20) The ball screw feeding device according to (A1), in which
one of the pair of support mechanisms further includes another housing position adjustment mechanism disposed adjacent to the housing position adjustment mechanism in series or in parallel between the bearing unit and the support base, and
the another housing position adjustment mechanism includes
   another support base side member provided on the support base side and through which the screw shaft penetrates,
   another bearing housing side member provided on the bearing housing side, through which the screw shaft penetrates, and movable in the axial direction relative to the another support base side member, and
   a pressure generating unit that is accommodated in a compressed state in a pressure chamber formed between the another support base side member and the another bearing housing side member.

According to this configuration, in the case of series arrangement, it is possible to maintain the axial rigidity of the ball screw feeding device even when the extension of the screw shaft is longer, and it is also possible to improve aligning performance and coaxial performance of the screw shaft. In the case of parallel arrangement, a larger axial load can be generated as compared with the case where a single housing position adjustment mechanism is disposed, and the axial rigidity can be maintained.

(A21) A ball screw feeding device, including:
a screw shaft including an outer peripheral surface formed with a spiral screw groove;
a nut including an inner peripheral surface formed with a spiral screw groove;
a plurality of balls arranged between the screw groove of the screw shaft and the screw groove of the nut in a freely rolling manner; and
a pair of support mechanisms that support both ends in an axial direction of the screw shaft in a rotatable manner, in which
one of the pair of support mechanisms includes
   a bearing unit including a bearing housing and an angular ball bearing including an outer ring fitted into the bearing housing, an inner ring fitted onto an axial end of the screw shaft, and a ball disposed between the outer ring and the inner ring in a freely rolling manner,
   a support base through which the screw shaft penetrates, and
   a housing position adjustment mechanism attached to the bearing unit and the support base, and
the housing position adjustment mechanism includes
   a support base side member attached to the support base and through which the screw shaft penetrates,
   a bearing housing side member attached to the bearing housing, through which the screw shaft penetrates, and movable relative to the support base side member in the axial direction,
   a working fluid accommodated in a pressure chamber formed between the support base side member and the bearing housing side member, a storage chamber formed in either one of the support base side member and the bearing housing side member, and an orifice allowing the pressure chamber to communicate with the storage chamber,
   an elastic member disposed in a compressed state between opposite end surfaces in the axial direction of the support base side member and the bearing housing side member in the pressure chamber, and
   a hollow member accommodated in the storage chamber.

According to this configuration, even when an axial length of the screw shaft changes due to an influence of heat, support rigidity in the axial direction can be continuously and stably maintained, and vibration in the axial direction and a radial direction can be damped.

(A22) A rotation support device, including:
a rotation shaft; and
a pair of support mechanisms that respectively support both ends in an axial direction of the rotation shaft in a rotatable manner, in which
one of the pair of support mechanisms includes
   a bearing unit including a bearing housing and a bearing that supports the rotation shaft in a rotatable manner with respect to the bearing housing and capable of supporting an axial load,
   a support base disposed on an axial center side of the bearing unit and through which the rotation shaft penetrates, and
   a housing position adjustment mechanism disposed between the bearing unit and the support base, and
the housing position adjustment mechanism includes
   a support base side member provided on the support base side and through which the rotation shaft penetrates,
   a bearing housing side member provided on the bearing housing side, through which the rotation shaft penetrates, and movable relative to the support base side member in the axial direction,
   a working fluid accommodated in a pressure chamber formed between the support base side member and the bearing housing side member, a storage chamber formed in either one of the support base side member and the bearing housing side member, and an orifice allowing the pressure chamber to communicate with the storage chamber,
   an elastic member disposed in a compressed state between opposite end surfaces in the axial direction of the support base side member and the bearing housing side member in the pressure chamber, and
   a hollow member accommodated in the storage chamber.

According to this configuration, even when an axial length of the rotation shaft changes due to an influence of heat, support rigidity in the axial direction can be continuously and stably maintained, and vibration in the axial direction and a radial direction can be damped.

(A23) A rotation support device, including:
a rotation shaft; and
a pair of support mechanisms that respectively support both ends in an axial direction of the rotation shaft in a rotatable manner, in which
one of the pair of support mechanisms includes
   a bearing unit including a bearing housing and a bearing that supports the rotation shaft in a rotatable manner with respect to the bearing housing and capable of supporting an axial load,
   a support base through which the rotation shaft penetrates, and
   a housing position adjustment mechanism attached to the bearing unit and the support base, and
the housing position adjustment mechanism includes
   a support base side member attached to the support base and through which the rotation shaft penetrates,
   a bearing housing side member attached to the bearing housing, through which the rotation shaft penetrates, and movable relative to the support base side member in the axial direction,
   a working fluid accommodated in a pressure chamber formed between the support base side member and the bearing housing side member, a storage chamber formed in either one of the support base side member and the bearing housing side member, and an orifice allowing the pressure chamber to communicate with the storage chamber,
   an elastic member disposed in a compressed state between opposite end surfaces in the axial direction of the support base side member and the bearing housing side member in the pressure chamber, and
   a hollow member accommodated in the storage chamber.

According to this configuration, even when an axial length of the rotation shaft changes due to an influence of heat, support rigidity in the axial direction can be continuously and stably maintained, and vibration in the axial direction and a radial direction can be damped.

(A24) A support mechanism position adjustment mechanism for a shaft support device including a shaft and a pair of support mechanisms provided at both ends in an axial direction of the shaft to support the shaft with respect to a base, the support mechanism position adjustment mechanism for a shaft support device being provided in one of the pair of support mechanisms, the support mechanism position adjustment mechanism including:
a first member provided on one of the support mechanism side and the base side, and through which the shaft is capable of penetrating;
a second member provided on the other of the support mechanism side and the base side, and through which the shaft is capable of penetrating, and which is movable in the axial direction relative to the first member;
a working fluid accommodated in a pressure chamber formed between the first member and the second member, a storage chamber formed in either one of the first member and the second member, and an orifice allowing the pressure chamber to communicate with the storage chamber;
an elastic member disposed in a compressed state between opposite end surfaces in the axial direction of the first member and the second member in the pressure chamber; and
a hollow member accommodated in the storage chamber.

According to this configuration, even when an axial length of the shaft changes due to an influence of heat, support rigidity in the axial direction can be continuously and stably maintained, and vibration in the axial direction and a radial direction can be damped.

(A25) A support mechanism position adjustment mechanism for a shaft support device including a shaft and a pair of support mechanisms provided at both ends in an axial direction of the shaft to support the shaft with respect to a base, the support mechanism position adjustment mechanism for a shaft support device being provided in one of the pair of support mechanisms, the support mechanism position adjustment mechanism including:
a first member attached to one of the support mechanism and the base, and through which the shaft is capable of penetrating;
a second member attached to the other of the support mechanism and the base, and through which the shaft is capable of penetrating, and which is movable in the axial direction relative to the first member;
a working fluid accommodated in a pressure chamber formed between the first member and the second member, a storage chamber formed in either one of the first member and the second member, and an orifice allowing the pressure chamber to communicate with the storage chamber;
an elastic member disposed in a compressed state between opposite end surfaces in the axial direction of the first member and the second member in the pressure chamber; and
a hollow member accommodated in the storage chamber.

According to this configuration, even when an axial length of the shaft changes due to an influence of heat, support rigidity in the axial direction can be continuously and stably maintained, and vibration in the axial direction and a radial direction can be damped.

(A26) A rotation support device, including:
a rotation shaft; and
a pair of support mechanisms that respectively support both ends in an axial direction of the rotation shaft in a rotatable manner, in which
one of the pair of support mechanisms includes
   a bearing unit including a bearing housing and a bearing that supports the rotation shaft in a rotatable manner with respect to the bearing housing and capable of supporting an axial load,
   a support base through which the rotation shaft penetrates, and
   a housing position adjustment mechanism disposed between the bearing unit and the support base, and
the housing position adjustment mechanism includes
   a support base side member provided on the support base side and through which the rotation shaft penetrates or which is disposed around the rotation shaft,
   a bearing housing side member provided on the bearing housing side, through which the rotation shaft penetrates or which is disposed around the rotation shaft, and movable relative to the support base side member in the axial direction,
   a working fluid accommodated in a pressure chamber formed between the support base side member and the bearing housing side member, a storage chamber formed in the support base side member or the bearing housing side member, and an orifice allowing the pressure chamber to communicate with the storage chamber,
   an elastic member disposed in a compressed state between opposite end surfaces in the axial direction of the support base side member and the bearing housing side member in the pressure chamber, and
   a hollow member accommodated in the storage chamber.

According to this configuration, even when an axial length of the rotation shaft changes due to an influence of heat, support rigidity in the axial direction can be continuously and stably maintained, and vibration in the axial direction and a radial direction can be damped.

(A27) The rotation support device according to (A26), in which
one of the support base side member and the bearing housing side member includes a plurality of concave portions that open to one side in the axial direction,
the other of the support base side member and the bearing housing side member includes a plurality of convex portions that protrude toward the other side in the axial direction and are respectively fitted into the plurality of concave portions in a slidable manner in the axial direction,
a plurality of the pressure chambers are respectively formed between the plurality of concave portions and the plurality of convex portions, and
at least one of the plurality of convex portions is formed with the storage chamber and the orifice such that the storage chamber is in communication with the pressure chamber via the orifice.

According to this configuration, a layout of the housing position adjustment mechanism can be freely configured by the plurality of pressure chambers.

(A28) The rotation support device according to (A27), in which
the plurality of pressure chambers are arranged on both sides in a width direction with respect to the rotation shaft.

According to this configuration, a height dimension of the housing position adjustment mechanism can be reduced.

(A29) The rotation support device according to (A27), in which
the plurality of convex portions are each formed with the storage chamber and the orifice,
the elastic member is disposed in a compressed state in each of the plurality of pressure chambers, and
the hollow member is accommodated in each of the plurality of storage chambers.

According to this configuration, the plurality of pressure chambers and the plurality of storage chambers can be configured in common.

(A30) The rotation support device according to (A26), in which
the rotation support device is a ball screw feeding device in which the rotation shaft is a screw shaft in which a spiral screw groove is formed on an outer peripheral surface, and further includes a nut including an inner peripheral surface formed with a spiral screw groove, and a plurality of balls disposed between the screw groove of the screw shaft and the screw groove of the nut in a freely rolling manner.

According to this configuration, a ball screw feeding device in which the support rigidity in the axial direction can be continuously and stably maintained even when an axial length of the rotation shaft changes due to an influence of heat can be configured.

(A31) A support mechanism position adjustment mechanism for a shaft support device including a shaft and a pair of support mechanisms provided at both ends in an axial direction of the shaft to support the shaft with respect to a base, the support mechanism position adjustment mechanism for a shaft support device being provided in one of the pair of support mechanisms, the support mechanism position adjustment mechanism including:
a first member provided on one of the support mechanism side and the base side, and through which the shaft is capable of penetrating or which is capable of being disposed around the shaft;
a second member provided on the other of the support mechanism side and the base side, and through which the shaft is capable of penetrating or which is capable of being disposed around the shaft, and which is movable in the axial direction relative to the first member;
a working fluid accommodated in a pressure chamber formed between the first member and the second member, a storage chamber formed in the first member or the second member, and an orifice allowing the pressure chamber to communicate with the storage chamber;
an elastic member disposed in a compressed state between opposite end surfaces in the axial direction of the first member and the second member in the pressure chamber; and
a hollow member accommodated in the storage chamber.

According to this configuration, even when an axial length of the shaft changes due to an influence of heat, support rigidity in the axial direction can be continuously and stably maintained, and vibration in the axial direction and a radial direction can be damped.

(B1) A rotation support device, including:
a rotation shaft; and
a pair of support mechanisms that respectively support both ends in an axial direction of the rotation shaft in a rotatable manner, in which
one of the pair of support mechanisms includes
   a bearing unit including a bearing housing and a bearing that supports the rotation shaft in a rotatable manner with respect to the bearing housing and capable of supporting an axial load,
   a support base through which the rotation shaft penetrates or which is disposed around the rotation shaft, and
   a housing position adjustment mechanism disposed between the bearing unit and the support base, and
the housing position adjustment mechanism includes
   a support base side member provided on the support base side and through which the rotation shaft penetrates or which is disposed around the rotation shaft,
   a bearing housing side member provided on the bearing housing side, through which the rotation shaft penetrates or which is disposed around the rotation shaft, and movable relative to the support base side member in the axial direction,
   a working fluid accommodated in a pressure chamber formed between the support base side member and the bearing housing side member, a storage chamber formed in the support base side member or the bearing housing side member, and an orifice allowing the pressure chamber to communicate with the storage chamber,
   an elastic member disposed in a compressed state between opposite end surfaces in the axial direction of the support base side member and the bearing housing side member in the pressure chamber, and
   a hollow member accommodated in the storage chamber.

According to this configuration, even when an axial length of the rotation shaft changes due to an influence of heat, support rigidity in the axial direction can be continuously and stably maintained, and vibration in the axial direction and a radial direction can be damped.

(B2) The rotation support device according to (B1), in which
one of the support base side member and the bearing housing side member has an annular concave portion that opens to one side in the axial direction,
the other of the support base side member and the bearing housing side member has an annular convex portion that protrudes toward the other side in the axial direction and is fitted into the annular concave portion in a slidable manner in the axial direction,
the pressure chamber is formed between the annular concave portion and the annular convex portion,
the storage chamber is formed in the annular convex portion so as to open to an outward surface or an inward surface of the annular convex portion, and
the orifice is formed in the annular convex portion.

According to this configuration, since the pressure chamber is formed between the annular concave portion and the annular convex portion, the housing position adjustment mechanism can be configured compactly around the rotation shaft. The working fluid passes through the orifice and a gap between the outward surface of the annular convex portion and an inward surface of the annular concave portion, so that the vibration can be damped.

(B3) The rotation support device according to (B2), in which
at least one seal member is mounted between an inward surface of the annular concave portion and the outward surface of the annular convex portion, and between an outward surface of the annular concave portion and the inward surface of the annular convex portion.

According to this configuration, the seal member can prevent leakage of the working fluid with which the pressure chamber and the storage chamber are filled, and functions of the housing position adjustment mechanism can be maintained for a long period of time.

(B4) The rotation support device according to (B2) or (B3), in which
the working fluid is stored in each gap between the inward surface of the annular concave portion and the outward surface of the annular convex portion, and between the outward surface of the annular concave portion and the inward surface of the annular convex portion.

According to this configuration, the housing position adjustment mechanism can provide support rigidity in a radial direction to the rotation shaft, and can also have an alignment function with respect to the rotation shaft.

(B5) The rotation support device according to (B3), in which
the seal member is an O-ring,
a seal groove in which the O-ring is disposed is formed in each of the inward surface of the annular concave portion or the outward surface of the annular convex portion, and the outward surface of the annular concave portion or the inward surface of the annular convex portion, and
the seal groove includes a tapered surface whose groove depth decreases as a distance from the pressure chamber increases.

According to this configuration, by using the O-ring as the seal member, the O-ring also acts as a damping mechanism, and the vibration generated in the rotation shaft can be damped. Even when relative movement between the support base side member and the bearing housing side member occurs, the leakage of a hydraulic oil to an atmospheric pressure side can be prevented, and axial rigidity of the rotation support device can be continuously maintained.

(B6) The rotation support device according to (B3) or (B5), in which
the seal member is an O-ring, and
a wear-resistant member is interposed between the O-ring and at least one of the inward surface of the annular concave portion and the outward surface of the annular convex portion, and between the O-ring and at least one of the outward surface of the annular concave portion and the inward surface of the annular convex portion.

According to this configuration, by using the O-ring as the seal member, the O-ring also acts as a damping mechanism, and the vibration generated in the rotation shaft can be damped. Stress concentration applied to the O-ring can be dispersed, and damage such as wear of the O-ring and a contact surface with the O-ring can be reduced.

(B7) The rotation support device according to any one of (B1) to (B4), in which
the elastic member is a disc spring including a conical plate having a plurality of through holes or a plurality of slits penetrating the conical plate in the axial direction.

According to this configuration, the working fluid flows through the plurality of through holes or the plurality of slits, thereby achieving a damping effect.

(B8) The rotation support device according to (B1), in which
the hollow member includes at least one rib protruding from an inner peripheral surface thereof.

According to this configuration, when the hollow member is compressed and deformed, the hollow member can be prevented from being excessively deformed.

(B9) The rotation support device according to (B1), in which
a plurality of the hollow members are arranged in the storage chamber.

According to this configuration, even when the axial length of the rotation shaft changes due to the influence of heat, the support rigidity in the axial direction can be continuously and stably maintained by a total pressure generated by the plurality of hollow members.

(B10) The rotation support device according to (B1), in which
a surface of the hollow member is covered with an outer layer.

According to this configuration, rigidity of the hollow member can be changed and the hollow member can be protected from the liquid.

(B11) The rotation support device according to (B1), in which
the hollow member is a structure having a hollow cross section that is integrally molded with no seam.

According to this configuration, localized stress concentration is unlikely to occur, and a deformable hollow member can be easily manufactured.

(B12) The rotation support device according to (B1), in which
the hollow member is a joined body having a hollow cross section, which is formed by integrating two or more members via edges of the two or more members.

According to this configuration, a deformable hollow member can be easily manufactured.

(B13) The rotation support device according to (B1), in which
the hollow member forms a hollow cross section by bending a member and joining edges of the member.

According to this configuration, a deformable hollow member can be easily manufactured.

(B14) The rotation support device according to (B1), in which
one of the support base side member and the bearing housing side member includes a small-diameter cylindrical portion extending to one side in the axial direction and an outward flange portion extending from a tip of the small-diameter cylindrical portion toward an outer diameter side,
the other of the support base side member and the bearing housing side member includes a large-diameter cylindrical portion extending to the other side in the axial direction and including an inner peripheral surface in sliding contact with an outer peripheral surface of the outward flange portion, and an inward flange portion extending from a tip of the large-diameter cylindrical portion toward an inner diameter side and including an inner peripheral surface in sliding contact with an outer peripheral surface of the small-diameter cylindrical portion,
the pressure chamber is formed in an annular space partitioned by the small-diameter cylindrical portion, the outward flange portion, the large-diameter cylindrical portion, and the inward flange portion,
the storage chamber is formed in the outward flange portion or the inward flange portion so as to open to an inner peripheral surface of the large-diameter cylindrical portion or an outer peripheral surface of the small-diameter cylindrical portion, and
the orifice is formed in the outward flange portion or the inward flange portion in which the storage chamber is formed.

According to this configuration, even when an axial length of the rotation shaft changes due to an influence of heat, the support rigidity in the axial direction can be continuously and stably maintained. The working fluid passes through the orifice and the gap between the inner peripheral surface of the large-diameter cylindrical portion and the outer peripheral surface of the outward flange portion or between the outer peripheral surface of the small-diameter cylindrical portion and the inner peripheral surface of the inward flange portion, so that the vibration can be damped.

(B15) The rotation support device according to (B14), in which
at least one seal member is mounted between an inner peripheral surface of the inward flange portion and the outer peripheral surface of the small-diameter cylindrical portion, and between an outer peripheral surface of the outward flange portion and the inner peripheral surface of the large-diameter cylindrical portion.

According to this configuration, the seal member can prevent leakage of the working fluid accommodated in the pressure chamber and the storage chamber, and the functions of the housing position adjustment mechanism can be maintained for a long period of time.

(B16) The rotation support device according to (B14) or (B15), in which
the working fluid is stored in each gap between the inner peripheral surface of the inward flange portion and the outer peripheral surface of the small-diameter cylindrical portion, and between the outer peripheral surface of the outward flange portion and the inner peripheral surface of the large-diameter cylindrical portion.

According to this configuration, the housing position adjustment mechanism can provide support rigidity in a radial direction to the rotation shaft, and can also have an alignment function with respect to the rotation shaft.

(B17) The rotation support device according to (B15), in which
the seal member is an O-ring,
a seal groove in which the O-ring is disposed is formed in each of the inner peripheral surface of the inward flange portion or the outer peripheral surface of the small-diameter cylindrical portion, and the outer peripheral surface of the outward flange portion or the inner peripheral surface of the large-diameter cylindrical portion, and
the seal groove includes a tapered surface whose groove depth decreases as a distance from the pressure chamber increases.

According to this configuration, by using the O-ring as the seal member, the O-ring also acts as a damping mechanism, and the vibration generated in the rotation shaft can be damped. Even when relative movement between the support base side member and the bearing housing side member occurs, the leakage of a hydraulic oil to an atmospheric pressure side can be prevented, and axial rigidity of the rotation support device can be continuously maintained.

(B18) The rotation support device according to (B15), in which
the seal member is an O-ring, and
a wear-resistant member is interposed between the O-ring and at least one of the inner peripheral surface of the inward flange portion and the outer peripheral surface of the small-diameter cylindrical portion, and between the O-ring and at least one of the outer peripheral surface of the outward flange portion and the inner peripheral surface of the large-diameter cylindrical portion.

According to this configuration, by using the O-ring as the seal member, the O-ring also acts as a damping mechanism, and the vibration generated in the rotation shaft can be damped. Stress concentration applied to the O-ring can be dispersed, and damage such as wear of the O-ring and a contact surface with the O-ring can be reduced.

(B19) The rotation support device according to (B1), in which
a working medium volume change unit is attached to at least one of the support base side member and the bearing housing side member, and changes volumes of the hollow member and the working fluid by heating or cooling the hollow member and the working fluid.

According to this configuration, the hollow member and the working fluid can be heated or cooled to expand or contract the volumes of the hollow member and the working fluid, so that the support rigidity in the axial direction can be continuously maintained in a stable state.

(B20) The rotation support device according to (B1), in which
one of the pair of support mechanisms further includes another housing position adjustment mechanism disposed adjacent to the housing position adjustment mechanism in series or in parallel between the bearing unit and the support base, and
the another housing position adjustment mechanism includes
   another support base side member provided on the support base side and through which the rotation shaft penetrates or which is disposed around the rotation shaft,
   another bearing housing side member provided on the bearing housing side, through which the rotation shaft penetrates or which is disposed around the rotation shaft, and movable in the axial direction relative to the another support base side member, and
   a pressure generating unit that is accommodated in a compressed state in a pressure chamber formed between the another support base side member and the another bearing housing side member.

According to this configuration, in the case of series arrangement, it is possible to maintain the axial rigidity of the rotation support device even when the extension of the rotation shaft is longer, and it is also possible to improve aligning performance and coaxial performance of the rotation shaft. In the case of parallel arrangement, a larger axial load can be generated as compared with the case where a single housing position adjustment mechanism is disposed, and the axial rigidity can be maintained.

(B21) The rotation support device according to (B1), in which
one of the support base side member and the bearing housing side member includes a plurality of concave portions that open to one side in the axial direction,
the other of the support base side member and the bearing housing side member includes a plurality of convex portions that protrude toward the other side in the axial direction and are respectively fitted into the plurality of concave portions in a slidable manner in the axial direction,
a plurality of the pressure chambers are respectively formed between the plurality of concave portions and the plurality of convex portions, and
at least one of the plurality of convex portions is formed with the storage chamber and the orifice such that the storage chamber is in communication with the pressure chamber via the orifice.

According to this configuration, a layout of the housing position adjustment mechanism can be freely configured by the plurality of pressure chambers.

(B22) The rotation support device according to (B21), in which
the plurality of pressure chambers are arranged on both sides in a width direction with respect to the rotation shaft.

According to this configuration, a height dimension of the housing position adjustment mechanism can be reduced.

(B23) The rotation support device according to (B21), in which
the plurality of convex portions are each formed with the storage chamber and the orifice,
the elastic member is disposed in a compressed state in each of the plurality of pressure chambers, and
the hollow member is accommodated in each of the plurality of storage chambers.

According to this configuration, the plurality of pressure chambers and the plurality of storage chambers can be configured in common.

(B24) The rotation support device according to any one of (B1) to (B23), in which
the bearing of the bearing unit includes a pair of angular ball bearings each including an outer ring fitted into the bearing housing, an inner ring fitted onto an axial end of the rotation shaft, and a ball disposed between the outer ring and the inner ring in a freely rolling manner.

According to this configuration, in a case where the bearing unit includes the pair of angular ball bearings, even when an axial length of the rotation shaft changes due to an influence of heat, support rigidity in the axial direction can be continuously and stably maintained.

(B25) The rotation support device according to any one of (B1) to (B24), in which
the rotation support device is a ball screw feeding device in which the rotation shaft is a screw shaft in which a spiral screw groove is formed on an outer peripheral surface, and further includes a nut including an inner peripheral surface formed with a spiral screw groove, and a plurality of balls disposed between the screw groove of the screw shaft and the screw groove of the nut in a freely rolling manner.

According to this configuration, a ball screw feeding device in which the support rigidity in the axial direction can be continuously and stably maintained even when an axial length of the rotation shaft changes due to an influence of heat can be configured.

(B26) A support mechanism position adjustment mechanism for a shaft support device including a shaft and a pair of support mechanisms provided at both ends in an axial direction of the shaft to support the shaft, the support mechanism position adjustment mechanism for a shaft support device being provided in one of the pair of support mechanisms, one of the pair of support mechanisms including a support through which the shaft penetrates or which is disposed around the shaft, the support mechanism position adjustment mechanism including:
a first member provided on one of the shaft side and the support side, and through which the shaft is capable of penetrating or which is capable of being disposed around the shaft;
a second member provided on the other of the shaft side and the support side, and through which the shaft is capable of penetrating or which is capable of being disposed around the shaft, and which is movable in the axial direction relative to the first member;
a working fluid accommodated in a pressure chamber formed between the first member and the second member, a storage chamber formed in the first member or the second member, and an orifice allowing the pressure chamber to communicate with the storage chamber;
an elastic member disposed in a compressed state between opposite end surfaces in the axial direction of the first member and the second member in the pressure chamber; and
a hollow member accommodated in the storage chamber.

According to this configuration, even when an axial length of the shaft changes due to an influence of heat, support rigidity in the axial direction can be continuously and stably maintained, and vibration in the axial direction and a radial direction can be damped.

(B27) The support mechanism position adjustment mechanism for a shaft support device according to (B26), in which
the shaft is a rotation shaft,
one of the pair of support mechanisms further includes a bearing unit including a bearing housing and a bearing that supports the rotation shaft in a rotatable manner with respect to the bearing housing and is capable of supporting an axial load,
the support mechanism position adjustment mechanism is a housing position adjustment mechanism disposed between the bearing unit and the support,
the first member is a support side member provided on the support side and through which the rotation shaft is capable of penetrating or which is capable of being disposed around the rotation shaft, and
the second member is a bearing housing side member provided on the bearing housing side, through which the rotation shaft is capable of penetrating or which is capable of being disposed around the rotation shaft, which is movable in the axial direction relative to the support side member, and which forms the accommodation space with the support side member.

According to this configuration, even when an axial length of the shaft changes due to an influence of heat, the support rigidity in the axial direction can be continuously and stably maintained.

(B28) The support mechanism position adjustment mechanism for a shaft support device according to (B26) or (B27), in which
one of the first member and the second member has an annular concave portion that opens to one side in the axial direction,
the other of the first member and the second member has an annular convex portion that protrudes toward the other side in the axial direction and is fitted into the annular concave portion in a slidable manner in the axial direction,
the pressure chamber is formed between the annular concave portion and the annular convex portion,
the storage chamber is formed in the annular convex portion so as to open to an outward surface or an inward surface of the annular convex portion, and
the orifice is formed in the annular convex portion.

According to this configuration, since the pressure chamber is formed between the annular concave portion and the annular convex portion, the support mechanism position adjustment mechanism can be configured compactly around the shaft. The working fluid passes through the orifice and a gap between the outward surface of the annular convex portion and an inward surface of the annular concave portion, so that the vibration can be damped.

(B29) The support mechanism position adjustment mechanism for a shaft support device according to (B26) or (B27), in which
at least one seal member is mounted between an inward surface of the annular concave portion and the outward surface of the annular convex portion, and between an outward surface of the annular concave portion and the inward surface of the annular convex portion.

According to this configuration, the seal member can prevent leakage of the working fluid with which the pressure chamber and the storage chamber are filled, and functions of the support mechanism position adjustment mechanism can be maintained for a long period of time.

(B30) The support mechanism position adjustment mechanism for a shaft support device according to (B28) or (B29), in which
the working fluid is stored in each gap between the inward surface of the annular concave portion and the outward surface of the annular convex portion, and between the outward surface of the annular concave portion and the inward surface of the annular convex portion.

According to this configuration, the support mechanism position adjustment mechanism can provide support rigidity in a radial direction to the shaft, and can also have an alignment function with respect to the shaft.

(B31) The support mechanism position adjustment mechanism for a shaft support device according to (B29), in which
the seal member is an O-ring,
a seal groove in which the O-ring is disposed is formed in each of the inward surface of the annular concave portion or the outward surface of the annular convex portion, and the outward surface of the annular concave portion or the inward surface of the annular convex portion, and
the seal groove includes a tapered surface whose groove depth decreases as a distance from the pressure chamber increases.

According to this configuration, by using the O-ring as the seal member, the O-ring also acts as a damping mechanism, and the vibration generated in the shaft can be damped. Even when relative movement between the first member and the second member occurs, the leakage of the hydraulic oil to an atmospheric pressure side can be prevented, and axial rigidity of the shaft support device can be continuously maintained.

(B32) The support mechanism position adjustment mechanism for a shaft support device according to (B29) or (B31), in which
the seal member is an O-ring, and
a wear-resistant member is interposed between the O-ring and at least one of the inward surface of the annular concave portion and the outward surface of the annular convex portion, and between the O-ring and at least one of the outward surface of the annular concave portion and the inward surface of the annular convex portion.

According to this configuration, by using the O-ring as the seal member, the O-ring also acts as a damping mechanism, and the vibration generated in the shaft can be damped. Stress concentration applied to the O-ring can be dispersed, and damage such as wear of the O-ring and a contact surface with the O-ring can be reduced.

(B33) The support mechanism position adjustment mechanism for a shaft support device according to any one of (B26) to (B30), in which
the elastic member is a disc spring including a conical plate having a plurality of through holes or a plurality of slits penetrating the conical plate in the axial direction.

According to this configuration, the working fluid flows through the plurality of through holes or the plurality of slits, thereby achieving a damping effect.

(B34) The support mechanism position adjustment mechanism for a shaft support device according to (B26) or (B27), in which
the hollow member includes at least one rib protruding from an inner peripheral surface thereof.

According to this configuration, when the hollow member is compressed and deformed, the hollow member can be prevented from being excessively deformed.

(B35) The support mechanism position adjustment mechanism for a shaft support device according to (B26) or (B27), in which
a plurality of the hollow members are arranged in the storage chamber.

According to this configuration, even when the axial length of the shaft changes due to the influence of heat, the support rigidity in the axial direction can be continuously and stably maintained by a total pressure generated by the plurality of hollow members.

(B36) The support mechanism position adjustment mechanism for a shaft support device according to (B26) or (B27), in which
a surface of the hollow member is covered with an outer layer.

According to this configuration, rigidity of the hollow member can be changed and the hollow member can be protected from the liquid.

(B37) The support mechanism position adjustment mechanism for a shaft support device according to (B26) or (B27), in which
the hollow member is a structure having a hollow cross section that is integrally molded with no seam.

According to this configuration, localized stress concentration is unlikely to occur, and a deformable hollow member can be easily manufactured.

(B38) The support mechanism position adjustment mechanism for a shaft support device according to (B26) or (B27), in which
the hollow member is a joined body having a hollow cross section, which is formed by integrating two or more members via edges of the two or more members.

According to this configuration, a deformable hollow member can be easily manufactured.

(B39) The support mechanism position adjustment mechanism for a shaft support device according to (B26) or (B27), in which
the hollow member forms a hollow cross section by bending a member and joining edges of the member.

According to this configuration, a deformable hollow member can be easily manufactured.

(B40) The support mechanism position adjustment mechanism for a shaft support device according to (B26) or (B27), in which
one of the first member and the second member includes a small-diameter cylindrical portion extending to one side in the axial direction and an outward flange portion extending from a tip of the small-diameter cylindrical portion toward an outer diameter side,
the other of the first member and the second member includes a large-diameter cylindrical portion extending to the other side in the axial direction and including an inner peripheral surface in sliding contact with an outer peripheral surface of the outward flange portion, and an inward flange portion extending from a tip of the large-diameter cylindrical portion toward an inner diameter side and including an inner peripheral surface in sliding contact with an outer peripheral surface of the small-diameter cylindrical portion,
the pressure chamber is formed in an annular space partitioned by the small-diameter cylindrical portion, the outward flange portion, the large-diameter cylindrical portion, and the inward flange portion,
the storage chamber is formed in the outward flange portion or the inward flange portion so as to open to an inner peripheral surface of the large-diameter cylindrical portion or an outer peripheral surface of the small-diameter cylindrical portion, and
the orifice is formed in the outward flange portion or the inward flange portion in which the storage chamber is formed.

According to this configuration, even when an axial length of the shaft changes due to an influence of heat, the support rigidity in the axial direction can be continuously and stably maintained. The working fluid passes through the orifice and the gap between the inner peripheral surface of the large-diameter cylindrical portion and the outer peripheral surface of the outward flange portion or between the outer peripheral surface of the small-diameter cylindrical portion and the inner peripheral surface of the inward flange portion, so that the vibration can be damped.

(B41) The support mechanism position adjustment mechanism for a shaft support device according to (B40), in which
at least one seal member is mounted between an inner peripheral surface of the inward flange portion and the outer peripheral surface of the small-diameter cylindrical portion, and between an outer peripheral surface of the outward flange portion and the inner peripheral surface of the large-diameter cylindrical portion.

According to this configuration, the seal member can prevent leakage of the working fluid accommodated in the pressure chamber and the storage chamber, and functions of the support mechanism position adjustment mechanism can be maintained for a long period of time.

(B42) The support mechanism position adjustment mechanism for a shaft support device according to (B40) or (B41), in which
the working fluid is stored in each gap between the inner peripheral surface of the inward flange portion and the outer peripheral surface of the small-diameter cylindrical portion, and between the outer peripheral surface of the outward flange portion and the inner peripheral surface of the large-diameter cylindrical portion.

According to this configuration, the support mechanism position adjustment mechanism can provide support rigidity in a radial direction to the shaft, and can also have an alignment function with respect to the shaft.

(B43) The support mechanism position adjustment mechanism for a shaft support device according to (B41), in which
the seal member is an O-ring,
a seal groove in which the O-ring is disposed is formed in each of the inner peripheral surface of the inward flange portion or the outer peripheral surface of the small-diameter cylindrical portion, and the outer peripheral surface of the outward flange portion or the inner peripheral surface of the large-diameter cylindrical portion, and
the seal groove includes a tapered surface whose groove depth decreases as a distance from the pressure chamber increases.

According to this configuration, by using the O-ring as the seal member, the O-ring also acts as a damping mechanism, and the vibration generated in the shaft can be damped. Even when relative movement between the first member and the second member occurs, the leakage of the hydraulic oil to an atmospheric pressure side can be prevented, and axial rigidity of the shaft support device can be continuously maintained.

(B44) The support mechanism position adjustment mechanism for a shaft support device according to (B41), in which
the seal member is an O-ring, and
a wear-resistant member is interposed between the O-ring and at least one of the inner peripheral surface of the inward flange portion and the outer peripheral surface of the small-diameter cylindrical portion, and between the O-ring and at least one of the outer peripheral surface of the outward flange portion and the inner peripheral surface of the large-diameter cylindrical portion.

According to this configuration, by using the O-ring as the seal member, the O-ring also acts as a damping mechanism, and the vibration generated in the shaft can be damped. Stress concentration applied to the O-ring can be dispersed, and damage such as wear of the O-ring and a contact surface with the O-ring can be reduced.

(B45) The support mechanism position adjustment mechanism for a shaft support device according to (B26) or (B27), in which
a working medium volume change unit is attached to at least one of the first member and the second member, and changes volumes of the hollow member and the working fluid by heating or cooling the hollow member and the working fluid.

According to this configuration, the hollow member and the working fluid can be heated or cooled to expand or contract the volumes of the hollow member and the working fluid, so that the support rigidity in the axial direction can be continuously maintained in a stable state.

(B46) The support mechanism position adjustment mechanism for a shaft support device according to (B26) or (B27), in which
one of the pair of support mechanisms further includes another support mechanism position adjustment mechanism disposed adjacent to the support mechanism position adjustment mechanism in series or in parallel between the bearing unit and the support base, and
the another support mechanism position adjustment mechanism includes
   another first member provided on the support base side and through which the shaft penetrates or which is disposed around the rotation shaft,
   another second member provided on the bearing housing side, through which the shaft penetrates or which is disposed around the rotation shaft, and movable in the axial direction relative to the another first member, and
   a pressure generating unit that is accommodated in a compressed state in a pressure chamber formed between the another first member and the another second member.

According to this configuration, in the case of series arrangement, it is possible to maintain the axial rigidity of the shaft support device even when the extension of the shaft is longer, and it is also possible to improve aligning performance and coaxial performance of the shaft. In the case of parallel arrangement, a larger axial load can be generated as compared with the case where a single support mechanism position adjustment mechanism is disposed, and the axial rigidity can be maintained.

(B47) The support mechanism position adjustment mechanism for a shaft support device according to (B26) or (B27), in which
one of the first member and the second member includes a plurality of concave portions that open to one side in the axial direction,
the other of the first member and the second member includes a plurality of convex portions that protrude toward the other side in the axial direction and are respectively fitted into the plurality of concave portions in a slidable manner in the axial direction,
a plurality of the pressure chambers are respectively formed between the plurality of concave portions and the plurality of convex portions, and
at least one of the plurality of convex portions is formed with the storage chamber and the orifice such that the storage chamber is in communication with the pressure chamber via the orifice

According to this configuration, a layout of the support mechanism position adjustment mechanism can be freely configured by the plurality of pressure chambers.

(B48) The support mechanism position adjustment mechanism for a shaft support device according to (B47), in which
the plurality of pressure chambers are arranged on both sides in a width direction with respect to the shaft.

According to this configuration, a height dimension of the support mechanism position adjustment mechanism can be reduced.

(B49) The support mechanism position adjustment mechanism for a shaft support device according to (B47), in which
the plurality of convex portions are each formed with the storage chamber and the orifice,
the elastic member is disposed in a compressed state in each of the plurality of pressure chambers, and
the hollow member is accommodated in each of the plurality of storage chambers

According to this configuration, the plurality of pressure chambers and the plurality of storage chambers can be configured in common.

Note that the present application is based on Japanese Patent Application No. 2022-173763 filed on October 28, 2022, Japanese Patent Application No. 2023-118997 filed on July 21, 2023, and Japanese Patent Application No. 2023-134637 filed on August 22, 2023, contents of which are incorporated by reference into the present application.

### REFERENCE SIGNS LIST

20 ball screw feeding device (shaft support device, rotation support device)
21 screw shaft (shaft, rotation shaft)
23 nut
30 first support mechanism (support mechanism)
31 fixed side bearing housing
33, 53 angular ball bearing (bearing)
34, 54 outer ring
35, 55 inner ring
36, 56 ball
38a, 38b fastening nut
40 second support mechanism (support mechanism)
41 bearing unit
43 support base (support)
51 movable side bearing housing (bearing housing)
51a inward flange
59 wear-resistant member
60 housing position adjustment mechanism (support mechanism position adjustment mechanism)
61 support base side member (first member)
62 bearing housing side member (second member)
64 annular concave portion
65 annular convex portion
66 pressure chamber
67 O-ring (seal member)
68 seal groove
69a tapered surface
70 hydraulic oil (working fluid)
71 storage chamber
72 orifice
80 disc spring (elastic member)
90 hollow member
120 rotation support device
121 rotation shaft
160 another housing position adjustment mechanism (another support mechanism position adjustment mechanism)
161 another support base side member (another support side member)
162 another bearing housing side member
170 another working fluid
180, 181 heating element (working medium volume change unit)
182, 183 cooling medium (working medium volume change unit)

## Claims

1. A rotation support device, comprising:
a rotation shaft; and
a pair of support mechanisms that respectively support both ends in an axial direction of the rotation shaft in a rotatable manner, wherein
one of the pair of support mechanisms includes
a bearing unit including a bearing housing and a bearing that supports the rotation shaft in a rotatable manner with respect to the bearing housing and capable of supporting an axial load,
a support base through which the rotation shaft penetrates or which is disposed around the rotation shaft, and
a housing position adjustment mechanism disposed between the bearing unit and the support base, and
the housing position adjustment mechanism includes
a support base side member provided on the support base side and through which the rotation shaft penetrates or which is disposed around the rotation shaft,
a bearing housing side member provided on the bearing housing side, through which the rotation shaft penetrates or which is disposed around the rotation shaft, and movable relative to the support base side member in the axial direction,
a working fluid accommodated in a pressure chamber formed between the support base side member and the bearing housing side member, a storage chamber formed in the support base side member or the bearing housing side member, and an orifice allowing the pressure chamber to communicate with the storage chamber,
an elastic member disposed in a compressed state between opposite end surfaces in the axial direction of the support base side member and the bearing housing side member in the pressure chamber, and
a hollow member accommodated in the storage chamber.

2. The rotation support device according to claim 1, wherein
one of the support base side member and the bearing housing side member has an annular concave portion that opens to one side in the axial direction,
the other of the support base side member and the bearing housing side member has an annular convex portion that protrudes toward the other side in the axial direction and is fitted into the annular concave portion in a slidable manner in the axial direction,
the pressure chamber is formed between the annular concave portion and the annular convex portion,
the storage chamber is formed in the annular convex portion so as to open to an outward surface or an inward surface of the annular convex portion, and
the orifice is formed in the annular convex portion.

3. The rotation support device according to claim 2, wherein
at least one seal member is mounted between an inward surface of the annular concave portion and the outward surface of the annular convex portion, and between an outward surface of the annular concave portion and the inward surface of the annular convex portion.

4. The rotation support device according to claim 2 or 3, wherein
the working fluid is stored in each gap between the inward surface of the annular concave portion and the outward surface of the annular convex portion, and between the outward surface of the annular concave portion and the inward surface of the annular convex portion.

5. The rotation support device according to claim 3, wherein
the seal member is an O-ring,
a seal groove in which the O-ring is disposed is formed in each of the inward surface of the annular concave portion or the outward surface of the annular convex portion, and the outward surface of the annular concave portion or the inward surface of the annular convex portion, and
the seal groove includes a tapered surface whose groove depth decreases as a distance from the pressure chamber increases.

6. The rotation support device according to claim 3, wherein
the seal member is an O-ring, and
a wear-resistant member is interposed between the O-ring and at least one of the inward surface of the annular concave portion and the outward surface of the annular convex portion, and between the O-ring and at least one of the outward surface of the annular concave portion and the inward surface of the annular convex portion.

7. The rotation support device according to claim 1, wherein
the elastic member is a disc spring including a conical plate having a plurality of through holes or a plurality of slits penetrating the conical plate in the axial direction.

8. The rotation support device according to claim 1, wherein
the hollow member includes at least one rib protruding from an inner peripheral surface thereof.

9. The rotation support device according to claim 1, wherein
a plurality of the hollow members are arranged in the storage chamber.

10. The rotation support device according to claim 1, wherein
a surface of the hollow member is covered with an outer layer.

11. The rotation support device according to claim 1, wherein
the hollow member is a structure having a hollow cross section that is integrally molded with no seam.

12. The rotation support device according to claim 1, wherein
the hollow member is a joined body having a hollow cross section, which is formed by integrating two or more members via edges of the two or more members.

13. The rotation support device according to claim 1, wherein
the hollow member forms a hollow cross section by bending a member and joining edges of the member.

14. The rotation support device according to claim 1, wherein
one of the support base side member and the bearing housing side member includes a small-diameter cylindrical portion extending to one side in the axial direction and an outward flange portion extending from a tip of the small-diameter cylindrical portion toward an outer diameter side,
the other of the support base side member and the bearing housing side member includes a large-diameter cylindrical portion extending to the other side in the axial direction and including an inner peripheral surface in sliding contact with an outer peripheral surface of the outward flange portion, and an inward flange portion extending from a tip of the large-diameter cylindrical portion toward an inner diameter side and including an inner peripheral surface in sliding contact with an outer peripheral surface of the small-diameter cylindrical portion,
the pressure chamber is formed in an annular space partitioned by the small-diameter cylindrical portion, the outward flange portion, the large-diameter cylindrical portion, and the inward flange portion,
the storage chamber is formed in the outward flange portion or the inward flange portion so as to open to an inner peripheral surface of the large-diameter cylindrical portion or an outer peripheral surface of the small-diameter cylindrical portion, and
the orifice is formed in the outward flange portion or the inward flange portion in which the storage chamber is formed.

15. The rotation support device according to claim 14, wherein
at least one seal member is mounted between an inner peripheral surface of the inward flange portion and the outer peripheral surface of the small-diameter cylindrical portion, and between an outer peripheral surface of the outward flange portion and the inner peripheral surface of the large-diameter cylindrical portion.

16. The rotation support device according to claim 14 or 15, wherein
the working fluid is stored in each gap between the inner peripheral surface of the inward flange portion and the outer peripheral surface of the small-diameter cylindrical portion, and between the outer peripheral surface of the outward flange portion and the inner peripheral surface of the large-diameter cylindrical portion.

17. The rotation support device according to claim 15, wherein
the seal member is an O-ring,
a seal groove in which the O-ring is disposed is formed in each of the inner peripheral surface of the inward flange portion or the outer peripheral surface of the small-diameter cylindrical portion, and the outer peripheral surface of the outward flange portion or the inner peripheral surface of the large-diameter cylindrical portion, and
the seal groove includes a tapered surface whose groove depth decreases as a distance from the pressure chamber increases.

18. The rotation support device according to claim 15, wherein
the seal member is an O-ring, and
a wear-resistant member is interposed between the O-ring and at least one of the inner peripheral surface of the inward flange portion and the outer peripheral surface of the small-diameter cylindrical portion, and between the O-ring and at least one of the outer peripheral surface of the outward flange portion and the inner peripheral surface of the large-diameter cylindrical portion.

19. The rotation support device according to claim 1, wherein
a working medium volume change unit is attached to at least one of the support base side member and the bearing housing side member, and changes volumes of the hollow member and the working fluid by heating or cooling the hollow member and the working fluid.

20. The rotation support device according to claim 1, wherein
one of the pair of support mechanisms further includes another housing position adjustment mechanism disposed adjacent to the housing position adjustment mechanism in series or in parallel between the bearing unit and the support base, and
the another housing position adjustment mechanism includes
another support base side member provided on the support base side and through which the rotation shaft penetrates or which is disposed around the rotation shaft,
another bearing housing side member provided on the bearing housing side, through which the rotation shaft penetrates or which is disposed around the rotation shaft, and movable in the axial direction relative to the another support base side member, and
a pressure generating unit that is accommodated in a compressed state in a pressure chamber formed between the another support base side member and the another bearing housing side member.

21. The rotation support device according to claim 1, wherein
one of the support base side member and the bearing housing side member includes a plurality of concave portions that open to one side in the axial direction,
the other of the support base side member and the bearing housing side member includes a plurality of convex portions that protrude toward the other side in the axial direction and are respectively fitted into the plurality of concave portions in a slidable manner in the axial direction,
a plurality of the pressure chambers are respectively formed between the plurality of concave portions and the plurality of convex portions, and
at least one of the plurality of convex portions is formed with the storage chamber and the orifice such that the storage chamber is in communication with the pressure chamber via the orifice.

22. The rotation support device according to claim 21, wherein
the plurality of pressure chambers are arranged on both sides in a width direction with respect to the rotation shaft.

23. The rotation support device according to claim 21, wherein
the plurality of convex portions are each formed with the storage chamber and the orifice,
the elastic member is disposed in a compressed state in each of the plurality of pressure chambers, and
the hollow member is accommodated in each of the plurality of storage chambers.

24. The rotation support device according to claim 1, wherein
the bearing of the bearing unit includes a pair of angular ball bearings each including an outer ring fitted into the bearing housing, an inner ring fitted onto an axial end of the rotation shaft, and a ball disposed between the outer ring and the inner ring in a freely rolling manner.

25. The rotation support device according to claim 1, wherein
the rotation support device is a ball screw feeding device in which the rotation shaft is a screw shaft in which a spiral screw groove is formed on an outer peripheral surface, and further comprises a nut including an inner peripheral surface formed with a spiral screw groove, and a plurality of balls disposed between the screw groove of the screw shaft and the screw groove of the nut in a freely rolling manner.

26. A support mechanism position adjustment mechanism for a shaft support device including a shaft and a pair of support mechanisms provided at both ends in an axial direction of the shaft to support the shaft, the support mechanism position adjustment mechanism for a shaft support device being provided in one of the pair of support mechanisms, one of the pair of support mechanisms including a support through which the shaft penetrates or which is disposed around the shaft, the support mechanism position adjustment mechanism comprising:
a first member provided on one of the shaft side and the support side, and through which the shaft is capable of penetrating or which is capable of being disposed around the shaft;
a second member provided on the other of the shaft side and the support side, and through which the shaft is capable of penetrating or which is capable of being disposed around the shaft, and which is movable in the axial direction relative to the first member;
a working fluid accommodated in a pressure chamber formed between the first member and the second member, a storage chamber formed in the first member or the second member, and an orifice allowing the pressure chamber to communicate with the storage chamber;
an elastic member disposed in a compressed state between opposite end surfaces in the axial direction of the first member and the second member in the pressure chamber; and
a hollow member accommodated in the storage chamber.

27. The support mechanism position adjustment mechanism for a shaft support device according to claim 26, wherein
the shaft is a rotation shaft,
one of the pair of support mechanisms further includes a bearing unit including a bearing housing and a bearing that supports the rotation shaft in a rotatable manner with respect to the bearing housing and is capable of supporting an axial load,
the support mechanism position adjustment mechanism is a housing position adjustment mechanism disposed between the bearing unit and the support,
the first member is a support side member provided on the support side and through which the rotation shaft is capable of penetrating or which is capable of being disposed around the rotation shaft, and
the second member is a bearing housing side member provided on the bearing housing side, through which the rotation shaft is capable of penetrating or which is capable of being disposed around the rotation shaft, which is movable in the axial direction relative to the support side member, and which forms the accommodation space with the support side member.
